# EUROPEAN PATENT APPLICATION

(11) **EP 2 433 685 A2**
(43) Date of publication of application: **28.03.2012**
(21) Application number: 11182269.8
(22) Date of filing: 22.09.2011
(51) Int. Cl.: A63F 13/10

(54) **Information processing apparatus capable of associating data with each other, information processing system, and information processing program**

(30) Priority: 28.09.2010 JP 2010217101
(71) Applicant: Nintendo Co. Ltd., Kyoto 601-8501 (JP)
(72) Inventor: Akifusa, Yusuke, Kyoto-shi, Kyoto 601-8501 (JP); Nitta, Masahiro, Kyoto-shi, Kyoto 601-8501 (JP); Nagaya, Masahiko, Kyoto-shi, Kyoto 605-0983 (JP); Kagita, Asako, Kyoto-shi, Kyoto 605-0983 (JP); Fujisawa, Yasuhito, Kyoto-shi, Kyoto 605-0983 (JP)
(74) Representative: Grünecker, Kinkeldey, Stockmair & Schwanhäusser

(57) **Abstract**

An information processing apparatus (1) includes display means (110, 120) having first and second display regions, first display control means (100, 111) for displaying a first object showing first data in the first display region, second display control means (100, 112) for displaying a second object showing second data in the second display region, acceptance means (122) for accepting a series of position indication operations in the second display region, and association control means (100) for selecting the second object based on a position indicated by the series of position indication operations within the second display region accepted by the acceptance means and performing processing for associating the first data with the second data corresponding to the selected second object based on subsequent variation in the indicated position.

## Description

### BACKGROUND OF THE INVENTION

### Field of the Invention

The present invention relates to an information processing apparatus capable of associating data with each other, an information processing system, and an information processing program.

### Description of the Background Art

Such a user interface as associating various types of information (data or an attribute value) with a displayed image has recently been proposed. For example, Japanese Patent Laying-Open No. 7-87433 discloses a still video capable of indexing a picked-up image with a simplified operation with the use of a pointing device.

With the still video disclosed in Japanese Patent Laying-Open No. 7-87433 described above, the pointing device should be used to perform a drag & drop operation of an icon, so that TAG information to be brought in correspondence with data of a picked-up image is directly designated.

### SUMMARY OF THE INVENTION

An object of the present invention is to provide an information processing apparatus having a novel user interface allowing more intuitive association of data with each other without directly designating objects to be brought in correspondence with each other, an information processing system, and an information processing program.

An information processing apparatus according to a first aspect of the present invention includes display means having first and second display regions, first display control means for displaying a first object showing first data in the first display region, second display control means for displaying a second object showing second data in the second display region, acceptance means for accepting a series of position indication operations in the second display region, and association control means for selecting the second object based on a position indicated by the series of position indication operations in the second display region accepted by the acceptance means and performing processing for associating the first data and the second data corresponding to the selected second object with each other, based on subsequent variation in the indicated position.

According to the first aspect of the present invention, while the first object is displayed in the first display region and the second object is displayed in the second display region, in response to the user's series of position indication operations in the second display region, the second object is selected and processing for associating the second data corresponding to the selected second object with the first data corresponding to the first object is performed. Namely, the user performs successive position indication operations (as will be described later, typically, a touch operation on a touch panel or the like) on the second display region in the display means, so as to select the second object and associate the first data and the second data corresponding to the selected second obj ect with each other.

Thus, association between objects can more intuitively be made, instead of directly designating an object to be associated as in the conventional example.

According to a second aspect of the present invention, in the first aspect described above, the association control means associates the second data with the first data when subsequent variation in the indicated position satisfies a prescribed condition.

According to the second aspect of the present invention, unless subsequent variation in indicated position satisfies a prescribed condition, association processing is not performed. Therefore, by appropriately setting a prescribed condition, the association processing can be prevented from being erroneously performed when the user performs an unintended position indication operation.

According to a third aspect of the present invention, in the first or second aspect described above, the association control means selects the second object based on an indication start position.

According to the third aspect of the present invention, when the user performs a series of position indication operations, the second object is selected based on a location indicated first (an indication start position) and hence selection of a second object of interest can more intuitively be made.

According to a fourth aspect of the present invention, in any of the first to third aspects described above, the first display control means provides display of the first object selected before the series of position indication operations in the first display region, based on an input operation different from the series of position indication operations.

According to the fourth aspect of the present invention, since the first object is selected based on an input operation different from the series of position indication operations, a first object unintended by the user is not selected. In addition, since the first object can be selected prior to the user's series of position indication operations in the second display region, such processing as selection of the second object and association of the second data corresponding to the selected second object can be performed at any timing.

According to a fifth aspect of the present invention, in any of the first to fourth aspects described above, the first display control means provides display of a notification image indicating that the first data and the second data are associated with each other, over or proximate to the first object.

According to the fifth aspect of the present invention, the user can intuitively know a state of association between the first data and the second data. Therefore, even when respective pieces of first data corresponding to a plurality of first objects should be associated with the second data, the user can perform association processing without confusion.

According to a sixth aspect of the present invention, in the fifth aspect described above, the first display control means uses as the notification image, an icon showing the second data associated with the first data corresponding to the first object of interest.

According to the sixth aspect of the present invention, the user can recognize the second data associated with the first data corresponding to the first object visually (based on appearance of the second object).

According to a seventh aspect of the present invention, in any of the first to sixth aspects described above, even when other second data has already been associated with the first data, the association control means cancels association with other second data in response to the series of position indication operations and associates second data corresponding to a newly selected second object with the first data.

According to the seventh aspect of the present invention, the user can determine by trial and error second data to be associated with the first data corresponding to the first object. Namely, since the information processing apparatus according to the present aspect provides a user interface allowing easy change in second data to be associated with the first data corresponding to the first object or undoing, the user can determine with fun, association between the first data and the second data with each other.

According to an eighth aspect of the present invention, in the second aspect described above, the prescribed condition includes a condition that variation in indicated position relative to the second display region, in a direction in which the first display region is present, occurs in the series of position indication operations.

According to the eighth aspect of the present invention, association processing is performed when the user performs in the second display region, a series of position indication operations toward the first display region in which the first object (first data) to be associated is displayed. Therefore, from a point of view of the user, by performing such a natural operation as moving a target second object toward the first object, target second data can be associated with the first data. Thus, association processing can intuitively be performed.

According to a ninth aspect of the present invention, in the second aspect described above, the prescribed condition includes a condition that variation in indicated position relative to the second display region, in a direction in which the first display region is present, occurs within a prescribed period of time immediately before end of the series of position indication operations, in the series of position indication operations.

According to the ninth aspect of the present invention, association between the first data and the second data is carried out based on an operation immediately before the end of the user's series of position indication operations. In performing the series of position operations, the user normally selects the second object (that is, the second data corresponding thereto) in the former operation, and indicates association with the first data in the latter operation. Therefore, association processing can be performed in line with the user's more natural feeling.

According to a tenth aspect of the present invention, in the second aspect described above, the prescribed condition includes a condition relating to at least one of a moving speed and an amount of displacement in connection with the series of position indication operations.

According to the tenth aspect of the present invention, typically, association processing is not performed until a moving speed in the user's series of position indication operations exceeds a prescribed value or until an amount of displacement in the user's series of position indication operations exceeds a prescribed value. Therefore, erroneous association processing unintended by the user can be prevented.

According to an eleventh aspect of the present invention, in any of the first to tenth aspects described above, the information processing apparatus further includes reproduction means for reproducing, when the second object is selected in the series of position indication operations, second data corresponding to the second object.

According to the eleventh aspect of the present invention, even in a case where appearance of the second object showing the second data does not directly express contents in the corresponding second data, contents in the corresponding second data are reproduced simply by the user's selection of the second object. Therefore, even when a plurality of second objects (second data) are present, the user can intuitively select target second data.

According to a twelfth aspect of the present invention, in any of the first to eleventh aspects described above, the second display control means provides display of a plurality of second objects in the second display region in a selectable manner.

According to the twelfth aspect of the present invention, the user can see a plurality of second objects brought in correspondence with the second data different from one another in the same second display region, and in addition, the user can arbitrarily select a target second object (second data) from among them. Therefore, the user can enjoy selection of second data to be associated with the first data.

According to a thirteenth aspect of the present invention, in any of the first to twelfth aspects described above, the display means includes first and second display screens aligned in a vertical direction when a user holds the information processing apparatus, the first display region corresponds to the first display screen, the second display region corresponds to the second display screen, and the acceptance means includes a touch panel arranged in correspondence with the second display screen.

According to the thirteenth aspect of the present invention, even in a case where first and second display screens aligned in the vertical direction are present, the first object and the second object are independently displayed in the respective display screens and the objects cannot directly be designated, the first data corresponding to the first object and the second data corresponding to the second object can be associated with each other more intuitively in a simplified manner.

In addition, even in a construction where a touch panel cannot be attached to the first display region, association processing can be performed only with an operation on the second display region.

According to a fourteenth aspect of the present invention, an information processing system including a storage medium storing an information processing program and a processing apparatus main body to which the storage medium can be attached is provided. The processing apparatus main body includes display means having first and second display regions. As a computer of the processing apparatus main body executes the information processing program stored in the storage medium, the processing apparatus main body is caused to function as first display control means for displaying a first object showing first data in the first display region, second display control means for displaying a second object showing second data in the second display region, acceptance means for accepting a series of position indication operations in the second display region, and association control means for selecting the second object based on a position indicated by the series of position indication operations in the second display region accepted by the acceptance means and performing processing for associating the first data and the second data corresponding to the selected second object with each other, based on subsequent variation in the indicated position.

According to a fifteenth aspect of the present invention, an information processing program executed by a computer of a processing apparatus including a display portion having first and second display regions is provided. The information processing program includes first display control instructions for displaying a first object showing first data in the first display region, second display control instructions for displaying a second object showing second data in the second display region, acceptance instructions for accepting a series of position indication operations in the second display region, and association control instructions for selecting the second object based on a position indicated by the series of position indication operations in the second display region accepted in response to the acceptance instructions and performing processing for associating the first data and the second data corresponding to the selected second object with each other, based on subsequent variation in the indicated position.

The foregoing and other objects, features, aspects and advantages of the present invention will become more apparent from the following detailed description of the present invention when taken in conjunction with the accompanying drawings.

### BRIEF DESCRIPTION OF THE DRAWINGS

Fig. 1 is a top view of a game device (in an opened state) according to an embodiment of the present invention.
Figs. 2A to 2D are projection views with an upper surface side of the game device shown in Fig. 1 being the center.
Figs. 3A and 3B are projection views with a bottom surface side of the game device shown in Fig. 1 being the center.
Fig. 4 is a block diagram showing an electrical configuration of the game device according to the embodiment of the present invention.
Fig. 5 is a block diagram showing an electrical configuration for implementing display control in the game device according to the embodiment of the present invention.
Fig. 6 is a schematic cross-sectional views of an upper LCD shown in Fig. 5.
Figs. 7A and 7B are diagrams for illustrating one example of a method of generating a pair of images having parallax used in stereoscopic display in the game device according to the embodiment of the present invention.
Figs. 8A and 8B are diagrams for illustrating a method of providing stereoscopic display using the pair of images having parallax generated with the method shown in Figs. 7A and 7B.
Fig. 9 is a diagram for illustrating transition of a processing mode provided in the game device according to the embodiment of the present invention.
Figs. 10A and 10B are diagrams each showing a screen example of a "viewing mode" (a state ST4) shown in Fig. 9.
Fig. 11 is a diagram showing a screen example of an "album creation mode" (a state ST5) shown in Fig. 9.
Figs. 12 and 13 are diagrams each showing a screen example displayed after an operation to touch an operation image shown in Fig. 11 has been performed.
Figs. 14 and 15 are diagrams each showing a screen example in sound effect association processing according to the embodiment of the present invention.
Figs. 16 and 17 are diagrams each showing an operation example in the sound effect association processing according to the present embodiment.
Figs. 18 and 19 are diagrams each showing another operation example in the sound effect association processing according to the present embodiment.
Figs. 20 and 21 are diagrams each showing a screen example in preview processing according to the embodiment of the present invention.
Figs. 22 to 26 are diagrams each showing a screen example in album data output processing according to the embodiment of the present invention.
Fig. 27 is a diagram showing a data structure of album data generated in the game device according to the present embodiment.
Figs. 28 to 30 are flowcharts of a main routine involved with display control processing provided in the game device according to the embodiment of the present invention.
Fig. 31 is a flowchart of an association processing determination sub routine.

### DESCRIPTION OF PREFERRED EMBODIMENTS

An embodiment of the present invention will be described in detail with reference to the drawings. The same or corresponding elements in the drawings have the same reference characters allotted, and description thereof will not be repeated.

A portable game device 1 representing a computer will be described hereinafter as a representative example of an information processing apparatus according to the present invention. In particular, game device 1 according to the present embodiment has a plurality of display devices as will be described later and at least one display device is capable of providing stereoscopic display. It is noted that even an information processing apparatus not incorporating a display device capable of providing stereoscopic display can provide a user interface according to the present embodiment.

An implementation example of the information processing apparatus according to the present invention is not limited to game device 1, and it may be mounted as a personal computer, a portable telephone, a portable terminal, or the like capable of executing also various applications. In addition, an information processing program according to the present invention may be incorporated as a partial function of various applications executed by a personal computer or the like. Moreover, as will be described later, implementation as an information processing system including a storage medium storing an information processing program and a processing apparatus main body to which the storage medium can be attached may be included as one form of the present invention.

### <A. Definition>

(1) In the present specification, "stereoscopic display", "three-dimensional display" and "3D display" mean that an image is expressed such that the user can visually recognize at least a partial object included in the image stereoscopically. In order to have the user visually recognize the object stereoscopically, typically, physiological functions of eyes and brain of a human are utilized. Such stereoscopic display is realized by using images displayed such that an object is stereoscopically visually recognized by the user (typically, a stereo image).
(2) In the present specification, "planar display", "two-dimensional display" and "2D display" are terms as opposed to "stereoscopic display" and the like described above, and they mean that an image is expressed such that the user cannot visually recognize an object included in the image stereoscopically.

### <B. Overview>

Game device 1 according to the present embodiment includes display means having a first display region (typically, an upper LCD 110 which will be described later) and a second display region (typically, a lower LCD 120 which will be described later), and at least one first object and at least one second object are displayed in the respective display regions. In addition, game device 1 has a feature for accepting a position indication operation in the second display region (typically, a touch panel). As the user performs a series of position indication operations in the second display region, the second object is selected in response thereto, and in succession, second data corresponding to the selected second object is associated with first data.

In particular, in game device 1 according to the present embodiment, when the user holds game device 1, a display screen of upper LCD 110 and a display screen of lower LCD 120 are aligned in a vertical direction. Then, the feature for accepting a position indication operation includes a touch panel arranged in correspondence with lower LCD 120.

By adopting such a feature, association between the objects can be made more intuitively, instead of directly designating objects to be associated. Namely, as the user performs such a natural operation as moving an object displayed on lower LCD 120 toward upper LCD 110, association between data corresponding to the object displayed on upper LCD 110 and data corresponding to an object displayed on lower LCD 120 is carried out.

Details of game device 1 according to the present embodiment will be described hereinafter.

### <C. Appearance of Device>

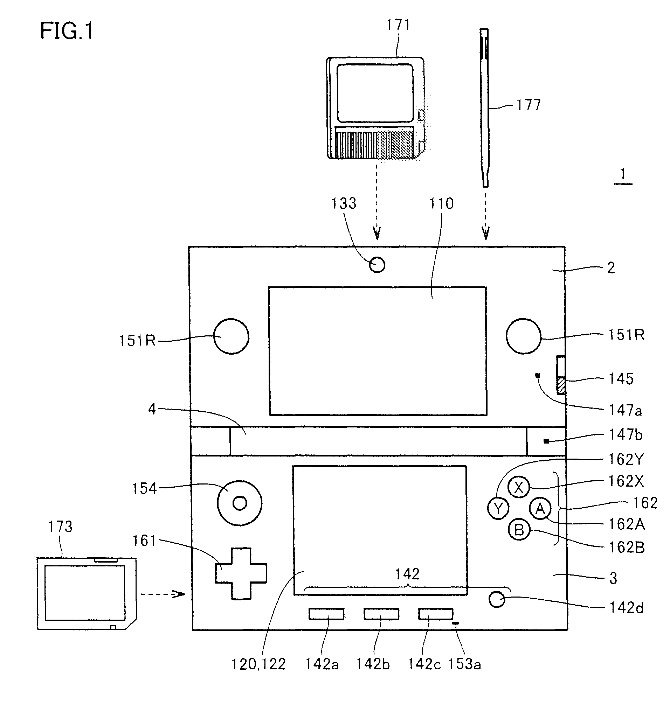

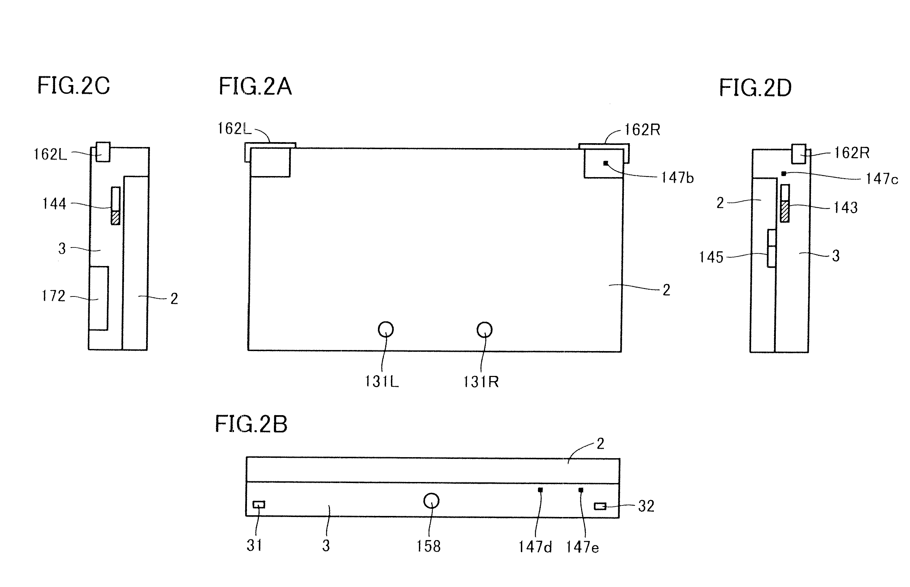

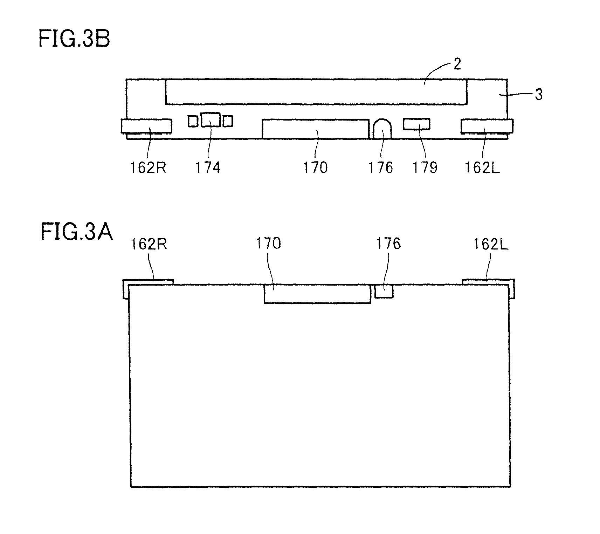

Fig. 1 is a top view of game device 1 (in an opened state) according to an embodiment of the present invention. Fig. 2A shows a top view of game device 1 (in a closed state). Fig. 2B shows a front view of game device 1, Fig. 2C shows a left side view of game device 1, and Fig. 2D shows a right side view of game device 1. Fig. 3A shows a bottom view of game device 1 and Fig. 3B shows a rear view of game device 1. In the present specification, for the sake of convenience, with arrangement of game device 1 as shown in Fig. 1 being the reference, the terms "top", "front", "left side", "right side", "bottom", and "rear" are used, however, these terms are formally used and they do not intend to restrict a manner of use of game device 1 by the user.

Portable game device 1 according to the present embodiment is configured to be foldable. Appearance of game device 1 in an opened state is as shown in Fig. 1, and appearance thereof in a closed state is as shown in Fig. 2A. Game device 1 preferably has such a size that the user can hold game device 1 with both hands or one hand even in the opened state.

Game device 1 has an upper housing 2 and a lower housing 3. Upper housing 2 and lower housing 3 are coupled to allow opening and closing (be foldable). In the example shown in Fig. 1, upper housing 2 and lower housing 3 are each formed like a rectangular plate, and they are coupled to each other to be pivotable around a long side portion thereof by means of a hinge 4. Game device 1 is maintained in the opened state when used by the user and it is maintained in the closed state when not used.

In addition, in game device 1, an angle between upper housing 2 and lower housing 3 can also be maintained at any angle between a position in the closed state and a position in the opened state (approximately 0° to approximately 180°). In other words, upper housing 2 can rest at any angle with respect to lower housing 3. For resting of these housings, friction force or the like generated in a coupling portion between upper housing 2 and lower housing 3 is used. In addition to or instead of friction force, a latch mechanism may be adopted in the coupling portion between upper housing 2 and lower housing 3.

Upper LCD (Liquid Crystal Display) 110 is provided in upper housing 2 as the display (display means) capable of providing stereoscopic display. Upper LCD 110 has a display region in a rectangular shape and it is arranged such that a direction in which its long side extends coincides with a direction in which a long side of upper housing 2 extends. In game device 1 according to the present embodiment, upper LCD 110 greater in screen size than lower LCD 120 is adopted so that the user can further enjoy stereoscopic display. It is noted, however, that the screen size does not necessarily have to be different as such, and a screen size can be designed as appropriate, depending on usage of an application, a size of game device 1, or the like.

A detailed configuration of upper LCD 110 will be described later.

An image pick-up device (image pick-up means) for picking up an image of some subject is provided in upper housing 2. More specifically, a pair of outer cameras 131L, 131R (see Fig. 2A) and an inner camera 133 (see Fig. 1) are provided in upper housing 2. Here, inner camera 133 is arranged above upper LCD 110, while the pair of outer cameras 131L and 131 R is arranged in a surface opposite to an inner main surface where inner camera 133 is arranged, that is, in an outer main surface of upper housing 2 (corresponding to a surface on the outside when game device 1 is in the closed state).

Based on such positional relation, the pair of outer cameras 131 Land 131 R can pick up an image of a subject present in a direction in which the outer main surface of upper housing 2 faces, while inner camera 133 can pick up an image of a subject present in a direction opposite to the direction of image pick-up by outer cameras 131L and 131 R, that is, in a direction in which the inner main surface of upper housing 2 faces.

The pair of outer cameras 131L and 131R is arranged at a prescribed distance from each other, and data of a pair of images obtained by these outer cameras 131 Land 131R (hereinafter also referred to as an "input image") is used for reproduction of the subject in stereoscopic display. Namely, outer cameras 131L and 131R function as what is called stereo cameras. Prescribed parallax in accordance with relative positional relation between outer camera 131L and outer camera 131R is present between the pair of input images obtained as a result of image pick-up by outer cameras 131 L and 131 R.

As will be described later, respective ranges (partial images) determined by a user's operation in the pair of input images obtained as a result of image pick-up by outer cameras 131L and 131 R may be used for stereoscopic display. Namely, a range used for stereoscopic display of the pair of input images is changed as appropriate by a user's operation.

Meanwhile, an input image obtained as a result of image pick-up by inner camera 133 is basically used for non-stereoscopic display (two-dimensional display, normal display). Therefore, in game device 1 according to the present embodiment, a pair of input images for stereoscopic display can be obtained by activating outer cameras 131 Land 131R, and an input image for non-stereoscopic display can be obtained by activating inner camera 133.

In addition, in upper housing 2, stereoscopic vision volume 145 is provided on the right of upper LCD 110. This stereoscopic vision volume 145 is used for adjusting stereoscopic display on upper LCD 110.

It is noted that switching between outer cameras 131L and 131 R and inner camera 133, that is, switching between stereoscopic display and two-dimensional display, can also be selected by the user on a program executed on game device 1. Here, stereoscopic vision volume 145 may be used for switching between stereoscopic display and two-dimensional display.

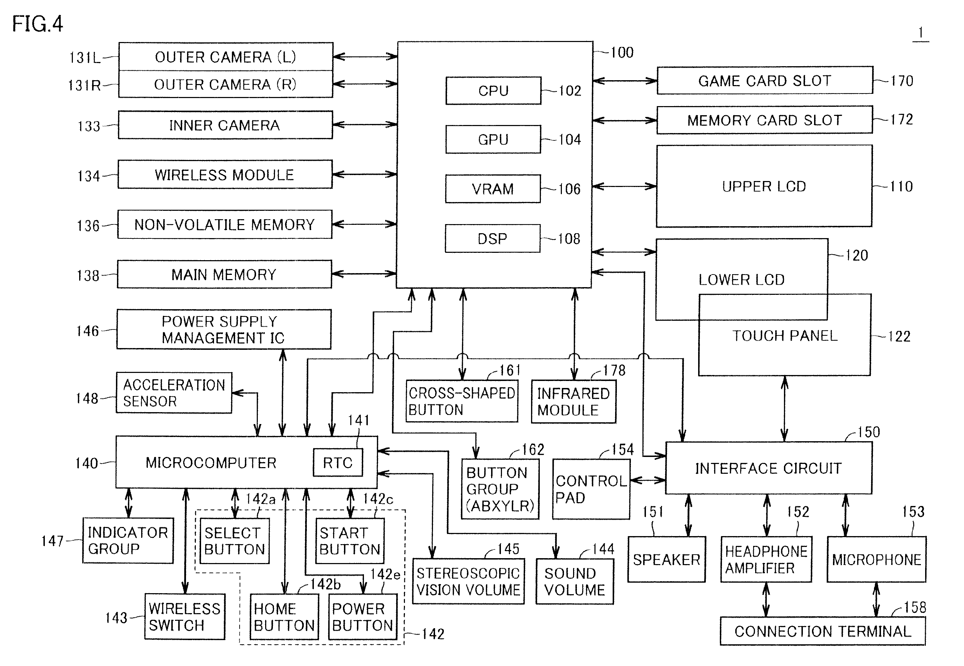

A speaker (a speaker 151 shown in Fig. 4) serving as an audio generation device (audio generation means) is accommodated in upper housing 2. More specifically, sound emission holes 151L and 151R are arranged on respective left and right sides of upper LCD 110 arranged in a central portion of the inner main surface of upper housing 2. Voice and sound generated from speaker 151 is emitted toward the user through sound emission holes 151 L and 151 R communicating with speaker 151.

Meanwhile, lower LCD 120 is provided as a display portion (display means) in lower housing 3. Lower LCD 120 has a display region in a rectangular shape and it is arranged such that a direction in which its long side extends coincides with a direction in which a long side of lower housing 3 extends.

Though a display capable of providing stereoscopic display as will be described later may be adopted as lower LCD 120, in the present embodiment, a common display for providing non-stereoscopic display of various types of information or the like is adopted. Therefore, for example, a display of other appropriate types such as a display utilizing EL (Electro Luminescence) may be adopted as lower LCD 120. In addition, resolution of the display portion (display means) is appropriately designed, depending on an application or the like to be executed.

In lower housing 3, a control pad 154, a cross-shaped button 161. and button groups 142, 162 are provided as input portions (input devices) for accepting an input operation from a user or the like. These input portions are provided on a main surface of lower housing 3 located on the inner side when upper housing 2 and lower housing 3 are folded. In particular, control pad 154 and cross-shaped button 161 are arranged at such positions as being readily operated with the user's left hand when he/she holds game device 1, and button group 162 is arranged at such a position as being readily operated with the user's right hand when he/she holds game device 1.

Control pad 154 mainly accepts an operation for adjusting stereoscopic display on game device 1. In particular, control pad 154 represents one example of an analog device capable of simultaneously accepting inputs having at least two degrees of freedom. More specifically, control pad 154 has a projection accepting a user's operation and it is structured to be able to change relative positional relation with respect to lower housing 3 at least in a vertical direction of the sheet surface and a horizontal direction of the sheet surface. In addition, control pad 154 outputs a two-dimensional analog value in accordance with a direction of displacement and an amount of displacement from a prescribed reference position.

By way of typical example, control pad 154 includes two potentiometers brought in correspondence with two axes respectively, and each potentiometer outputs an analog value (typically, a voltage or a current) having a value in accordance with an amount of operation and a direction of operation by the user. As the user varies control pad 154 to a larger extent from the reference position (typically, a direction perpendicular to lower housing 3), control pad 154 outputs a greater analog value.

It is noted that an analog stick, a joystick or the like may be adopted, instead of control pad 154 shown in Fig. 1.

Cross-shaped button 161 is an input portion capable of independently operating two directions, and outputs a two-dimensional value having values in accordance with a user's button operation in respective directions. It is noted that, unlike control pad 154 described above, a two-dimensional value generated by this cross-shaped button 161 is a digital value indicating "ON" or "OFF" separately for each direction. More specifically, cross-shaped button 161 permits displacement in the vertical direction of the sheet surface and the horizontal direction of the sheet surface by the user, and outputs "ON" or "OFF" in correspondence with the direction of displacement.

Button group 162 includes four operation buttons 162A, 162B, 162X. and 162Y brought in correspondence with the vertical and horizontal directions of the sheet surface. Namely, button group 162 also corresponds to an input portion capable of independently operating two directions, and outputs a value indicating a state of operation as a result of a user's operation of operation button 162A, 162B, 162X, 162Y arranged in correspondence with each direction. This value indicating a state of operation is also detected as an "operation input" which will be described later.

The operation input output from cross-shaped button 161 and/or button group 162 may be used for adjustment of stereoscopic display in game device 1. Alternatively, in various applications executed on game device 1, these operation inputs are used for such operations as select, enter and cancel involved with game processing.

Button group 142 includes a select button 142a, a HOME button 142b, a start button 142c, and a power button 142d. Select button 142a is typically used for selecting an application to be executed on game device 1. HOME button 142b is typically used for setting a menu application or various applications executed on game device 1 to an initial state. Start button 142c is typically used for starting execution of an application on game device 1. Power button 142d is used for turning ON/OFF power of game device 1.

A microphone (a microphone 153 shown in Fig. 4) serving as an audio obtaining device (audio obtaining means) is accommodated in lower housing 3. On the main surface of lower housing 3, a microphone hole 153a for microphone 153 to obtain sound around game device 1 is provided. It is noted that a position where microphone 153 is accommodated and a position of microphone hole 153a communicating with microphone 153 are not limited to those in the main surface of lower housing 3. For example, microphone 153 may be accommodated in hinge 4 and microphone hole 153a may be provided in the surface of hinge 4 at a position corresponding to a position where microphone 153 is accommodated.

In game device 1, in addition to control pad 154, cross-shaped button 161, and button groups 142. 162. a touch panel 122 is further provided as a pointing device serving as another input portion (input means). Touch panel 122 is attached to cover a screen of lower LCD 120, and when the user performs an input operation (a position indication operation, a pointing operation), touch panel 122 detects a value of a corresponding two-dimensional coordinate.

Namely, touch panel 122 accepts a user's position indication operation (a two-dimensional coordinate value) in a display region of lower LCD 120 and accepts change over time in the two-dimensional coordinate value while the position indication operation continues, that is, during a series of position indication operations.

Typically, resistive touch panel 122 can be adopted. It is noted, however, that touch panel 122 is not limited to the resistive type and various pressing-type touch panels may also be adopted. In addition, touch panel 122 preferably has resolution (detection accuracy) as high as that of lower LCD 120 (display accuracy). It is noted that the resolution of touch panel 122 does not necessarily have to exactly be equal to the resolution of lower LCD 120.

A pointing operation onto touch panel 122 is normally performed by the user with the use of a stylus pen 177, however, instead of stylus pen 177, the pointing operation (input operation) can also be performed with a user's own finger or the like. As shown in Figs. 1 and 3C, an accommodation portion 176 for stylus pen 177 is provided in the rear surface of lower housing 3. Namely, stylus pen 177 for an input operation onto touch panel 122 is normally stored in accommodation portions 176 and it is taken out by the user as necessary.

Instead of or in addition to touch panel 122, a mouse, a track ball, a pen tablet, or the like may be employed as a pointing device serving as accepting means for accepting a user's position indication operation. In addition, a pointer device capable of indicating a coordinate remotely from the display surface of the display (typically, a controller or the like of Wii®) may be adopted. With the use of any device, the structure is preferably such that a position indication operation associated with a position within a display region of lower LCD 120 is accepted.

As shown in Figs. 2C, 2D, 3A, and 3B, an L button 162L is provided at a left end portion of the rear surface of lower housing 3, and an R button 162R is provided at a right end portion on the rear surface of lower housing 3. L button 162L and R button 162R are arranged at such positions as readily being operated with the user's left forefinger and right forefinger respectively when he/she holds game device 1. L button 162L and R button 162R are used for such an operation as select in various applications executed on game device 1.

As shown in Fig. 2C, sound volume 144 is provided on a left side surface of lower housing 3. Sound volume 144 is used for adjusting a volume of the speaker (speaker 151 shown in Fig. 4) mounted on game device 1.

As shown in Fig. 2D, a wireless switch 143 is provided on the right side surface of lower housing 3. Wireless switch 143 switches wireless communication in game device 1 between an ON state (an active state) and an OFF state (an inactive state).

A game card 171 and/or a memory card 173 can be attached to game device 1. Namely, as shown in Fig. 3B, a game card slot 170 for attaching game card 171 is provided in the rear surface of lower housing 3. In the rear of game card slot 170, an interface for electrical connection between game device 1 and game card 171 is provided. Game card slot 170 is configured such that game card 171 is removably attached. Game card 171 retains an application program, a game program (both of which include an instruction set), or the like.

In addition, as shown in Fig. 2C, a memory card slot 172 for attaching memory card 173 is provided in the left side surface of lower housing 3. In the rear of memory card slot 172, an interface for electrical connection between game device 1 and memory card 173 is provided. Memory card slot 172 is configured such that memory card 173 is removably attached. Memory card 173 is used for reading a program or image data obtained from another information processing apparatus or game device, storage (saving) of data of an image picked up and/or processed by game device 1, or the like. Game card 171 is implemented by a non-volatile storage medium such as an SD (Secure Digital) card.

In game device 1, various displays for presenting an operation state or the like to the user are provided. More specifically, in lower housing 3 and upper housing 2, an indicator group 147 consisting of a plurality of LEDs (Light Emitting Diodes) is provided as a display (display means). Indicator group 147 includes a stereoscopic display indicator 147a, a notification indicator 147b, a wireless indicator 147c, a power supply indicator 147d, and a charge indicator 147e. Stereoscopic display indicator 147a is provided on the main surface of upper housing 2 and other indicators are provided on the main surface or on the side surface of lower housing 3.

Stereoscopic display indicator 147a gives notification of whether stereoscopic display is provided on upper LCD 110 or not. Typically, while stereoscopic display on upper LCD 110 is active, stereoscopic display indicator 147a illuminates.

Notification indicator 147b gives notification of whether information to be notified of the user is present or not. Typically, when an e-mail unread by the user is present or when some message is received from various servers, notification indicator 147b illuminates.

Wireless indicator 147c gives notification of a state of wireless communication in game device 1. Typically, when wireless communication is active, wireless indicator 147c illuminates.

Power supply indicator 147d gives notification of a power supply state in game device 1. Game device 1 contains a not-shown battery (typically, stored in lower housing 3), and it is mainly driven by electric power from this battery. Therefore, power supply indicator 147d gives notification of a state of power ON in game device 1 and/or a state of charge of the battery. Typically, while power of game device 1 is turned ON (in the ON state) and a state of charge of the battery is sufficiently high, power supply indicator 147d illuminates in green, and while power of game device 1 is turned ON (in the ON state) and a state of charge of the battery is low, it illuminates in red.

Charge indicator 147e gives notification of a state of charge of the battery described above. Typically, when a charge adapter (not shown) or the like is attached to game device 1 and the contained battery is being charged, charge indicator 147e illuminates. It is noted that the charge adapter is connected to a charge terminal 174 provided in the rear surface of game device 1, as shown in Fig. 3A.

In addition, game device 1 according to the present embodiment incorporates an infrared communication function, and an infrared port 179 is provided on the rear surface of game device 1. This infrared port 179 projects/receives infrared rays, which are carrier waves for data communication.

Moreover, in the front surface of game device 1, hooks 31, 32 for connection to a strap for suspending game device 1 are provided.

Further, on the front surface of lower housing 3. a connection terminal 158 for connecting a headphone and/or a microphone is provided.

### <D. Electrical Configuration of Device>

Referring to Fig. 4, game device 1 includes an operation processing unit 100. upper LCD 110, lower LCD 120, touch panel 122, outer cameras 131L, 131 R, inner camera 133. a wireless module 134, a non-volatile memory 136, a main memory 138, a microcomputer 140, button group 142, sound volume 144, stereoscopic vision volume 145, a power supply management IC (Integrated Circuit) 146, indicator group 147, an acceleration sensor 148, an interface circuit 150, speaker 151, a headphone amplifier 152, microphone 153, connection terminal 158, cross-shaped button 161, button group 162, game card slot 170, memory card slot 172. and an infrared module 178. In addition, game device 1 includes a battery and a power supply circuit that are not shown.

Operation processing unit 100 is responsible for overall control of game device 1. More specifically, operation processing unit 100 realizes various types of processing including control of stereoscopic display on upper LCD 110 by executing firmware (an instruction set) stored in advance in non-volatile memory 136, a program (an instruction set) or data read from game card 171 attached to game card slot 170, a program (an instruction set) or data read from memory card 173 attached to memory card slot 172, or the like.

It is noted that, in addition to a case where a program (an instruction set) executed by operation processing unit 100 is provided through game card 171 or memory card 173, a program may be provided to game device thorough an optical storage medium such as a CD-ROM or a DVD. Moreover, a program may be provided from a server device (not shown) connected through a network.

More specifically, operation processing unit 100 includes a CPU (Central Processing Unit) 102, a GPU (Graphical Processing Unit) 104, a VRAM (Video Random Access Memory) 106. and a DSP (Digital Signal Processor) 108. Processing in each unit will be described later. In addition, operation processing unit 100 exchanges data with each unit.

Each of outer cameras 131L, 131R and inner camera 133 is connected to operation processing unit 100, and outputs an input image obtained as a result of image pick-up to operation processing unit 100 in response to an instruction from operation processing unit 100. Each of these cameras includes image pick-up elements such as CCD (Charge Coupled Device) or CIS (CMOS Image Sensor) and a peripheral circuit for reading image data (input image) obtained by the image pick-up elements.

Wireless module 134 exchanges data with another game device I or some information processing apparatus through a wireless signal. By way of example, wireless module 134 communicates data with another device under a wireless LAN scheme complying with such standards as IEEE802.11a/b/g/n.

Non-volatile memory 136 stores firmware or the like necessary for a basic operation of game device 1 and a code describing the firmware is developed on main memory 138. As CPU 102 of operation processing unit 100 executes the code developed on main memory 138, basic processing in game device 1 is realized. In addition, non-volatile memory 136 may store data on various parameters set in advance in game device I (pre-set data). By way of example, non-volatile memory 136 is implemented by a flash memory.

Main memory 138 is used as a work area or a buffer area for operation processing unit 100 to perform processing. Namely, main memory 138 temporarily stores a program (a code) or data necessary for processing by operation processing unit 100. By way of example, main memory 138 is implemented by a PRAM (Pseudo-SRAM).

Microcomputer 140 mainly provides processing involved with a user interface. More specifically, microcomputer 140 is connected to operation processing unit 100 as well as to button group 142, sound volume 144, stereoscopic vision volume 145, power supply management IC 146, indicator group 147, and acceleration sensor 148. Microcomputer 140 senses a user's button operation or the like, outputs the result of sensing to operation processing unit 100, and causes an indicator for notifying the user of various types of information to illuminate, in response to a signal from operation processing unit 100.

In addition, microcomputer 140 has a real time counter (RTC: Real Time Clock) 141. Real time counter 141 is a part providing a time-counting function, and counts time in a predetermined cycle. The result of counting is successively output to operation processing unit 100. Operation processing unit 100 can also calculate the current time (date) or the like based on a count value counted by real time counter 141.

Power supply management IC 146 supplies electric power from a power supply (typically, the battery described above) mounted on game device 1 to each unit and controls an amount of supply thereof.

Acceleration sensor 148 detects displacement of game device I and the result of detection is output to operation processing unit 100 through microcomputer 140. The result of detection by acceleration sensor 148 is utilized in a program (a game application) executed on game device I .

Infrared module 178 establishes wireless communication (infrared communication) with another game device 1. Wireless communication established by this infrared module 178 is narrower in coverage than wireless communication through wireless module 134. Namely, infrared module 178 is designed to exchange data with game device 1 of the same type, in accordance with a predetermined communication protocol. It is noted that infrared rays which are carrier waves for infrared communication are projected/received through infrared port 179 (see Fig. 3B).

Interface circuit 150 is connected to operation processing unit 100 as well as to speaker 151, headphone amplifier 152, microphone 153, control pad 154, and touch panel 122. More specifically, interface circuit 150 includes an audio control circuit (not shown) for controlling speaker 151, headphone amplifier 152 and microphone 153 and a touch panel control circuit (not shown) for controlling touch panel 122.

Speaker 151 amplifies an audio signal from interface circuit 150 to output voice and sound through sound emission holes 151L and 151 R. Headphone amplifier 152 amplifies an audio signal from interface circuit 150 to output voice and sound from a connected headphone. Microphone 153 senses user's voice or the like uttered toward game device 1 to output an audio signal indicating sensed voice to interface circuit 150.

As described above, the audio control circuit constituting interface circuit 150 carries out A/D (analog/digital) conversion of an analog audio signal sensed by microphone 153 to output the resultant digital audio signal to operation processing unit 100, and carries out D/A (digital/analog) conversion of a digital audio signal generated by operation processing unit 100 or the like to output the resultant analog audio signal to speaker 151 and/or a connected headphone.

In addition, the touch panel control circuit constituting interface circuit 150 generates touch position data indicating a position where the user performed an input operation (a pointing operation) in response to a detection signal from touch panel 122 and outputs the data to operation processing unit 100. Namely, touch panel 122 outputs an operation input (touch position data) in accordance with a two-dimensional coordinate value corresponding to the position pointed on a touch surface.

Game card slot 170 and memory card slot 172 are each connected to operation processing unit 100. Game card slot 170 reads and writes data from and into attached game card 171 through a connector in response to a command from operation processing unit 100. Memory card slot 172 reads and writes data from and into attached memory card 173 through a connector in response to a command from operation processing unit 100.

Lower LCD 120 and upper LCD 110 each display an image in response to a command from operation processing unit 100. In a typical manner of use of game device 1, an image for accepting various operations is displayed on lower LCD 120 and stereoscopic display is provided on upper LCD 110.

### <E. Configuration of Display Portion>

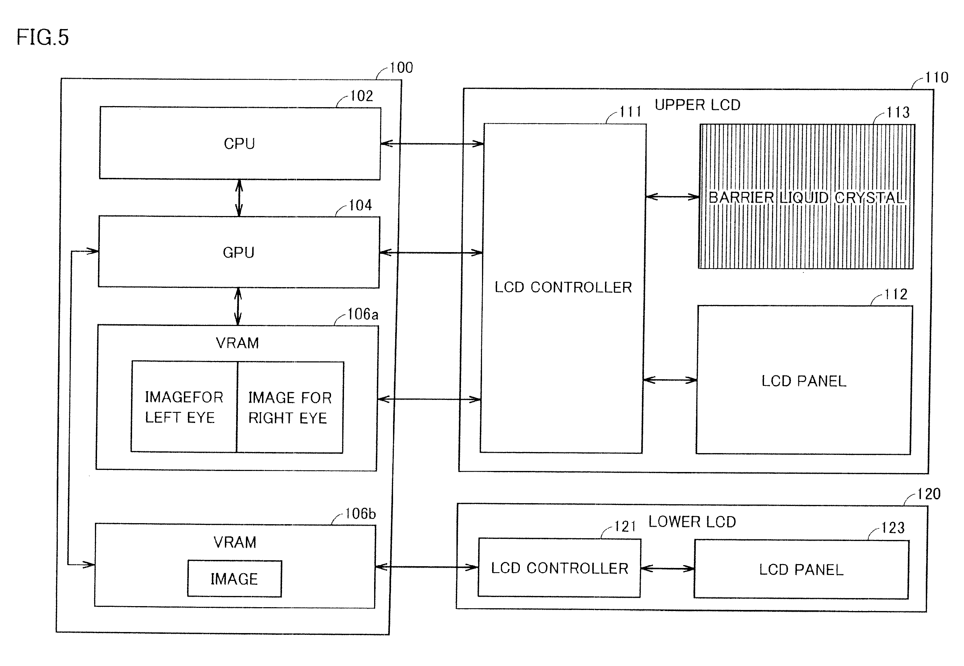

Referring to Fig. 5, operation processing unit 100 includes GPU 104 for mainly performing processing for displaying images on upper LCD 110 and lower LCD 120 respectively (image processing), in addition to CPU 102. GPU 104 has a processing circuit specialized for image processing and successively generates images to be displayed on upper LCD 110 and lower LCD 120 respectively in response to a command from CPU 102. These images are transferred to a VRAM 106a for upper LCD 110 and a VRAM 106b for lower LCD 120 respectively.

Here, a pair of images (an image for left eye and an image for right eye) for stereoscopic display on upper LCD 110 is written in VRAM 106a independently of each other. In contrast, since two-dimensional display (non-stereoscopic display) is provided on lower LCD 120, a single image is written in VRAM 106b.

Upper LCD 110 includes an LCD controller 111, an LCD panel 112, and a barrier liquid crystal 113. In contrast, lower LCD 120 includes an LCD controller 121 and an LCD panel 123.

A structure of upper LCD 110 is further described.

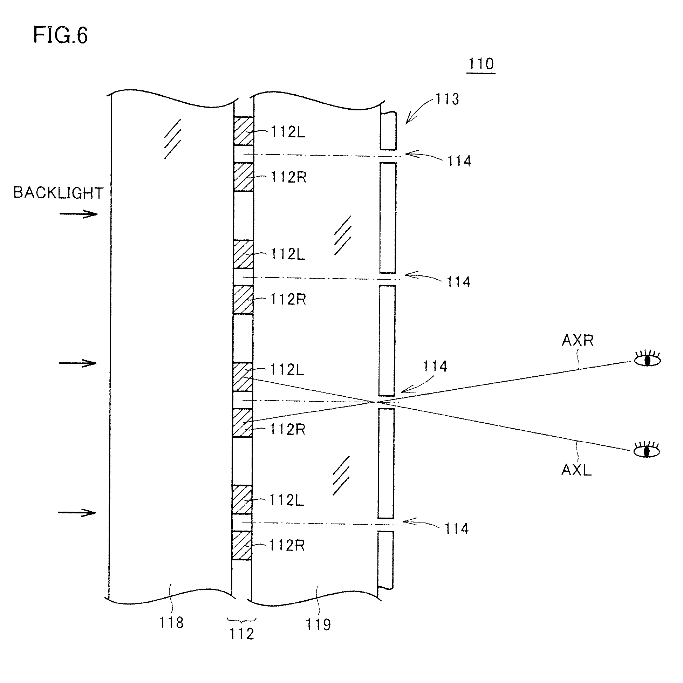

Fig. 6 shows a structure of a parallax barrier type liquid crystal display device as a typical example of upper LCD 110. Upper LCD 110 includes LCD panel 112 arranged between a glass substrate 118 and a glass substrate 119.

LCD panel 112 includes a left eye pixel group 112L and a right eye pixel group 112R. A not-shown backlight is provided on a side of glass substrate 118 opposite to glass substrate 119 and light from this backlight is emitted toward left eye pixel group 112L and right eye pixel group 112R. Left eye pixel group 112L and right eye pixel group 112R function as a spatial light modulator for adjusting light from the backlight. Here, each pixel in left eye pixel group 112L and each pixel in right eye pixel group 112R are alternately arranged.

Barrier liquid crystal 113 representing a parallax optical system is provided on a side opposite to the side where glass substrate 118 is in contact with left eye pixel group 112L and right eye pixel group 122R. In this barrier liquid crystal 113, a plurality of slits 114 are provided in rows and columns at prescribed intervals. Left eye pixel group 112L and right eye pixel group 112R are arranged symmetrically to each other, with an axis passing through a central position of each slit 114 and perpendicular to a surface of glass substrate 118 serving as the reference. By appropriately designing positional relation with the slit, of each set of left eye pixel group 112L and right eye pixel group 112R brought in correspondence with each slit, the user visually recognizes only left eye pixel group 112L with his/her left eye and visually recognizes only right eye pixel group 112R with his/her right eye.

Namely, each slit 114 in barrier liquid crystal 113 restricts a field of view of each of the user's right and left eyes to a corresponding angle. Consequently, only left eye pixel group 112L is present in a line of sight AXL of the user's left eye, while only right eye pixel group 112R is present in a line of sight AXR of the user's right eye.

Here, by causing left eye pixel group 112L and right eye pixel group 112R to display a pair of images having prescribed parallax, an image having prescribed parallax can be presented to the user. By displaying such a pair of images having prescribed parallax, the user feels as if he/she stereoscopically viewed a subject. Hereinafter, a surface of barrier liquid crystal 113 on the user side, that is, a surface on which this image is actually displayed, is also referred to as a display surface (of upper LCD 110).

More specifically, as shown in Fig. 5, GPU 104 successively writes an image for left eye and an image for right eye, by designating an address in VRAM 106a. LCD controller 111 successively reads image data in each column from the address of interest in VRAM 106a such that images in the direction of column constituting the image for left eye and the image for right eye written in VRAM 106a are alternately displayed in alignment on LCD panel 112, and drives LCD panel 112.

It is noted that upper LCD 110 can also provide two-dimensional display, that is, non-stereoscopic display, of an image. In this case, a method of inactivating barrier liquid crystal 113 and a method of setting parallax between the image for left eye and the image for right eye used for display to substantially zero, by providing a command to LCD controller 111, are available.

In the case of the former method, since a plurality of slits 114 provided in barrier liquid crystal 113 are inactivated, light from left eye pixel group 112L and right eye pixel group 112R is substantially incident on the user's left and right eyes. In this case, resolution for the user is substantially twice as high as resolution in stereoscopic display.

In the case of the latter method, since the image visually recognized by the user's left eye and the image visually recognized by the user's right eye are substantially equally controlled, the user visually recognizes the same image with his/her left and right eyes.

Meanwhile, non-stereoscopic display is provided on lower LCD 120. Namely, GPU 104 successively writes an image to be displayed, by designating an address in VRAM 106b, and LCD controller 121 successively reads images written in VRAM 106b and drives LCD panel 123.

Though a parallax barrier type display device has been exemplified in Fig. 6 by way of a typical example of a display capable of providing stereoscopic display, for example, a lenticular type display device or the like may also be adopted. According to such a type, a display area for an image for left eye and a display area for an image for right eye are arranged in a certain pattern (typically, alternately).

Alternatively, a configuration of a display capable of providing stereoscopic display may be such that two images different in main wavelength component are independently displayed and stereoscopic display is provided by having the user wear glasses incorporating two respective color filters different in transmitted wavelength range.

Similarly, a configuration may be such that two images are displayed with directions of polarization being differed and stereoscopic display is provided by having the user wear glasses incorporating two respective polarizing filters corresponding to the two directions of polarization.

In addition, such a form that an image for left eye and an image for right eye are alternately displayed with a display area for the image for left eye and a display area for the image for right eye being common may also be adopted, as in the method of utilizing shutter glasses (time-division type).

### <F. Stereoscopic Display>

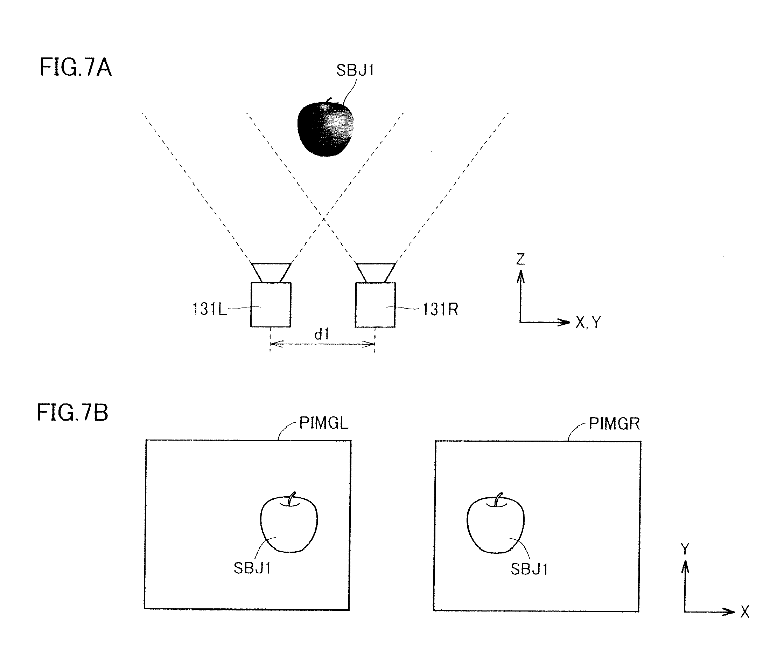

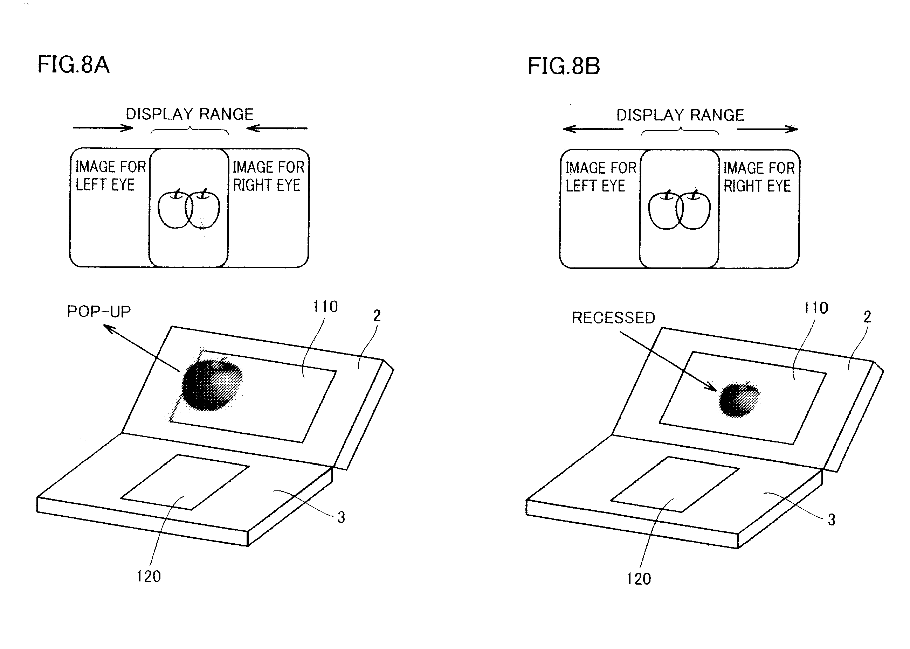

Referring next to Figs. 7A, 7B, 8A, and 8C, processing for providing stereoscopic display on upper LCD 110 of game device 1 according to the present embodiment will be described.

Fig. 7A shows a case where an "apple" is present as a subject SBJ1 at a prescribed distance from game device 1 and an image of this "apple" is picked up (stereo image pick-up) using the pair of outer cameras 131L, 131 R mounted on upper housing 2.

In the description below, it is assumed that the pair of outer cameras 131 L and 131R is arranged in alignment in a horizontal direction. Here, a horizontal direction is referred to as an X direction, a vertical direction is referred to as a Y direction, and a camera direction of each outer camera 131 L, 131R (a direction of an optical axis of image pick-up) is referred to as a Z direction (to be understood similarly hereinafter).

In addition, a pair of images providing stereoscopic vision (stereo images consisting of an image for left eye and an image for right eye) is displayed in substantially the same display region. Namely, according to the lenticular type as shown in Fig. 6, a pixel for left eye and a pixel for right eye are alternately arranged so that the image for left eye and the image for right eye of interest are spatially alternately displayed in a lateral direction of the screen. Alternatively, according to shutter glasses (time-division type), an image for left eye and an image for right eye of interest are temporally alternately displayed as the same display surface is temporally divided.

Therefore, a region in a stereoscopic image where parallax is zero looks like being present on the display surface when viewed from the user. Namely, by setting parallax of a target region to zero, the user feels that an object included in that region is located on or around the display surface of the display.

Fig. 7B shows one example of a pair of images (stereo images) obtained as a result of image pick-up in positional relation as shown in Fig. 7A. Namely, as outer camera 131L picks up an image of subject SBJ1, an input image PIMGL for left eye is generated, and as outer camera 131R picks up an image of subject SBJ1, an input image PIMGR for right eye is generated..

Comparing input image PIMGL for left eye and input image PIMGR for right eye with each other, it can be seen that a position of a subject image representing subject SBJ1 within input image PIMGL is different from a position of a subject image representing subject SBJ1 within input image PIMGR. Namely, in input image PIMGL, the position of the subject image representing subject SBJ1 is located relatively on the right side, while in input image PIMGR, the position of the subject image representing subject SBJ1 is located relatively on the left side.

By displaying the pair of images (stereo images) thus obtained and having parallax on the display surface of upper LCD 110, the user can stereoscopically visually recognize subject SBJ1 of the "apple".

It is noted that a pair of images generated as a result of image pick-up by outer cameras 131L and 13IR can be displayed on the display surface of upper LCD 110 in a manner superimposed on each other or relative positional relation between these images can also be changed. Namely, when input image PIMGL and input image PIMGR are displayed on the display surface of upper LCD 110 in a manner superimposed on each other, an amount of parallax in accordance with positional relation between outer cameras 131 Land 131R and subject SBJ1 at the time of image pick-up is produced. In addition, by changing a relative display position between input image PIMGL and input image PIMGR on the display surface of upper LCD 110, an amount of parallax regarding subject SBJ1 can be adjusted. Such adjustment of the amount of parallax will vary stereoscopic effect (an amount of pop-up/an amount of recess) visually recognized by the user.

Namely, as shown in Fig. 8A, when relative positional relation between input image PIMGL and input image PIMGR is changed in a direction to increase an amount of parallax regarding subject SBJ1. the user feels that subject SBJ1 is present closer toward the user side, relative to the display surface of upper LCD 110. So to speak, the user visually recognizes the subject image of subject SBJ 1 as if it "popped up" from the display surface.

In contrast, when relative positional relation between input image PIMGL and input image PIMGR is changed in a direction to decrease an amount of parallax regarding subject SBJ1, the user feels that subject SBJ1 is present at a position closer toward the display surface of upper LCD 110. So to speak, the user visually recognizes the subject image of subject SBJ1 as if it were "recessed" in the display surface.

Thus, by changing relative display position between input image PIMGL and input image PIMGR on the display surface of upper LCD 110, a position of subject SBJ1 (a position on a line from the user to the display surface) stereoscopically visually recognized by the user can be adjusted. Here, by displaying the entirety or a part of input images PIMGL and PIMGR having parallax on the display surface of upper LCD 110, stereoscopic display is provided.

### <G. Processing Mode>

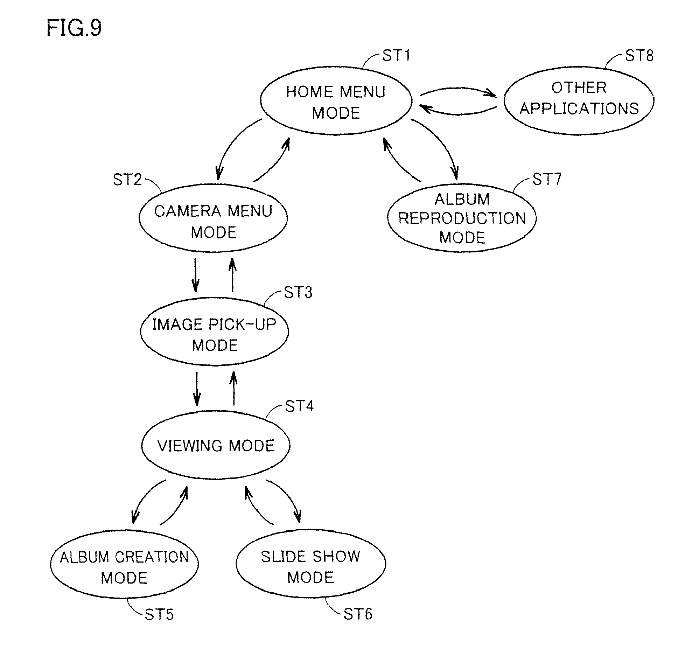

A processing mode provided in game device I according to the present embodiment will now be described with reference to Fig. 9.

Game device 1 has a "HOME menu mode" in which the user can select various applications (a state ST1). Though various applications installed in game device 1 can be executed in this "HOME menu mode," Fig. 9 shows an example where transition to a "camera menu mode" (a state ST2), an "album reproduction mode" (a state ST7), and "other applications" can be made.

In this "camera menu mode," a menu of applications with which an image can be obtained with image pick-up by using a camera or various operations such as edition of the obtained image can be performed as will be described later is displayed.

In addition, in the "album reproduction mode" (state ST7), an album created in accordance with a procedure as will be described later can be reproduced. The "album" as used herein means a collection of one or more pieces of image data, and an order of reproduction of images or the like may be defined in advance. It is noted that, in the "album reproduction mode," the order of display of images included in the album or the like may arbitrarily be changed.

From the "camera menu mode," transition to an "image pick-up mode" (a state ST3) can be made. In the "image pick-up mode," a pair of outer cameras 131 L and 131R (see Fig. 2A) or inner camera 133 (see Fig. 1), can be used to obtain an input image.

From the "image pick-up mode," transition to a "viewing mode" (a state ST4) can be made. In the "viewing mode", images obtained in the "image pick-up mode" can be viewed.

In addition, from the "viewing mode", transition to an "album creation mode" (a state ST5) or a "slide show mode" (a state ST6) can be made.

In the "slide show mode," images obtained in advance can successively be displayed, with the images being switched over time.

In the "album creation mode," input images obtained in the "image pick-up mode" or image data stored in memory card 173 (see Fig. 1) can be used to create an "album". In addition, in the "album creation mode," data of the created album (hereinafter also referred to as "album data") can also be output and saved. The album data created in this "album creation mode" can be displayed on display means (typically, upper LCD 110 and/or lower LCD 120 shown in Fig. 1) in the "album reproduction mode."

### <H. Viewing Mode>

Initially, processing in the "viewing mode" (state ST4) shown in Fig. 9 will be described.

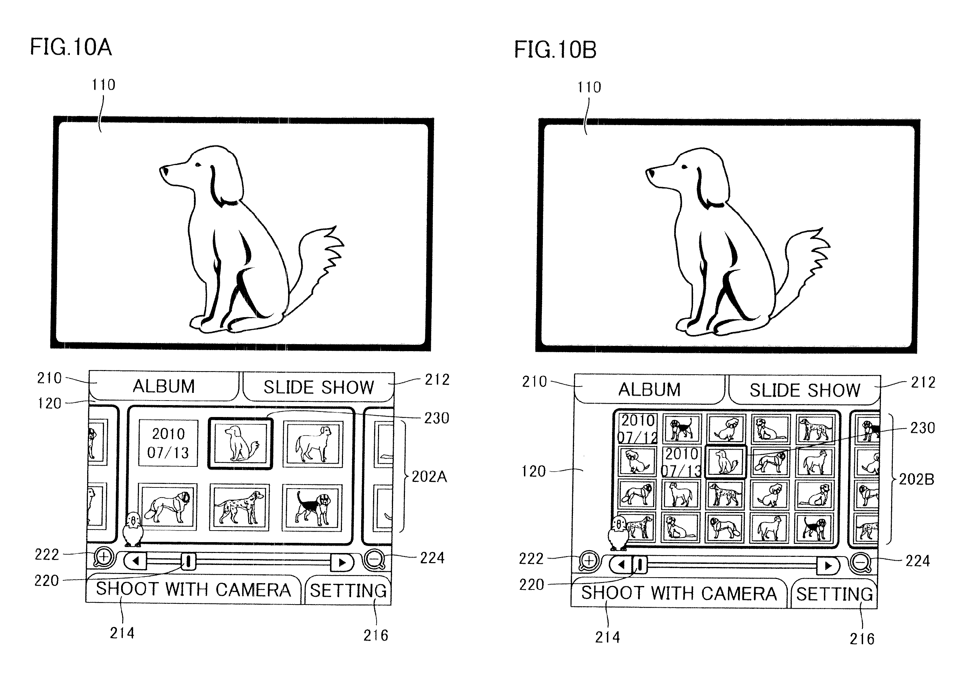

Figs. 10A and 10B each show a screen example of the "viewing mode" (state ST4) shown in Fig. 9. It is noted that Figs. 10A and 10B schematically show contents displayed on upper LCD 110 and lower LCD 120 in correspondence with positional relation therebetween, respectively. This is also the case with figures shown below.

Referring to Fig. 10A, in the "viewing mode" (state ST4), a listing image 202A including objects showing images obtained in advance (thumbnail images) is displayed on lower LCD 120. The objects (thumbnail images) included in this listing image 202A are preferably smaller in an amount of information than image data obtained through image pick-up or the like.

Such thumbnail images may be created separately from an image (hereinafter also referred to as a "main image" in contrast to the "thumbnail image") essentially obtained during image pick-up by a pair of outer cameras 131 L and 131R (see Fig. 2A) or inner camera 133 (see Fig. 1). In this case, data of the thumbnail images and data of the main image can be included in a single file of image data. In addition, in a case where a pair of outer cameras 131 L and 131R is used to obtain a pair of images (an image for left eye and an image for right eye) for stereoscopic display on upper LCD 110, this pair of images is preferably included in a single file of image data.

A selected display image 230 is displayed on this listing image 202A. A position of this selected display image 230 on listing image 202A varies in response to a user's operation of cross-shaped button 161 (see Fig. 1). The main image corresponding to the object (thumbnail image) shown by this selected display image 230 is displayed on upper LCD 110. Namely, an image selected through the user's operation from among the thumbnail images included in listing image 202A is displayed on upper LCD 110 in a zoomed-up manner.

Here, in a case where the selected thumbnail image is a pair of images for stereoscopic display, the image is stereoscopically displayed on upper LCD 110, while in a case where the selected thumbnail image is an image for two-dimensional display, the image is two-dimensionally displayed on upper LCD 110. It is noted that, even when a pair of images for stereoscopic display is selected, the image can also be displayed two-dimensionally on upper LCD 110.

In this "viewing mode", a slider image 220 is displayed in a lower portion of the screen of lower LCD 120. As the user uses stylus pen 177 or the like to perform a slide operation of this slider image 220 in a lateral direction over the sheet surface (move while keeping touching), the thumbnail images displayed on upper LCD 110 may be changed. Namely, the thumbnail images are aligned (virtually) under a prescribed alignment rule and the user can successively switch contents displayed on lower LCD 120 (effectively-displayed thumbnail images) by operating slider image 220. It is noted that switching among the thumbnail images may be made by continuously sliding a displayed portion or updating for each page.

In addition, in the "viewing mode", a zoom-up display icon 222 and a zoom-down display icon 224 are displayed in the lower portion of the screen of lower LCD 120. As the user uses stylus pen 177 or the like to perform an operation to touch this zoom-up display icon 222, the displayed thumbnail image is zoomed up. Consequently, since an area occupied by one thumbnail image becomes greater, a smaller number of thumbnail images are displayed in a list on lower LCD 120. On the other hand, when the user uses stylus pen 177 or the like to perform an operation to touch this zoom-down display icon 224, a displayed thumbnail image is made smaller. Consequently, since an area occupied by one thumbnail image becomes smaller, a larger number of thumbnail images are displayed in a list on lower LCD 120.

Fig. 10B shows such a state that the user performs an operation to touch zoom-down display icon 224 in a state shown in Fig. 10A and then slides slider image 220 toward the left over the sheet surface. Namely, in the state shown in Fig. 10A, thumbnail images in two rows x three columns are displayed in a list for each sheet (listing image 202A), whereas in the state shown in Fig. 10B, thumbnail images in four rows x five columns are displayed in a list for each sheet (a listing image 202B). In addition, in the state shown in Fig. 10A, among the virtually arranged thumbnail images, thumbnail images located at a prescribed position from the left end are displayed. On the other hand, in the state shown in Fig. 10B among the virtually arranged thumbnail images, thumbnail images located at the left end are displayed.

Moreover, lower LCD 120 includes an operation image 210 for indicating switch to the "album creation mode" (state ST5 shown in Fig. 9), an operation image 212 for indicating switch to the "slide show mode" (state ST6 shown in Fig. 9), an operation image 214 for indicating switch to the "image pick-up mode" (state ST3 shown in Fig. 9), and an operation image 216 for making various settings.

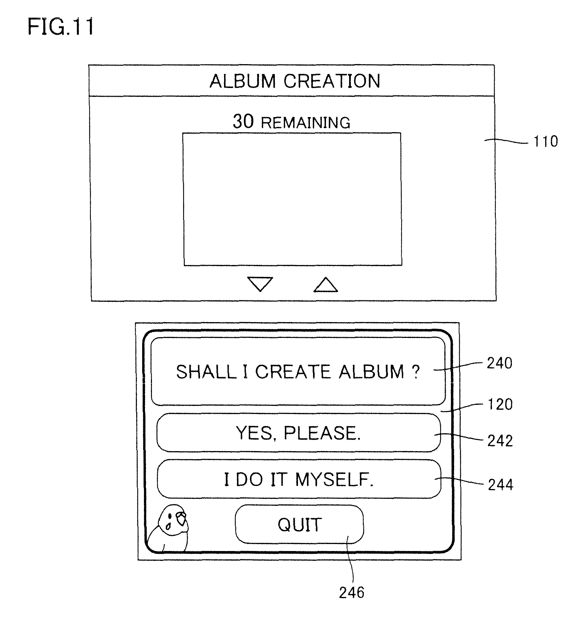

Namely, as the user uses stylus pen 177 or the like to perform an operation to touch operation image 210 labeled with "album", transition to screen display as shown in Fig. 11 which will be described later is made. Alternatively, as the user uses stylus pen 177 or the like to perform an operation to touch operation image 212 labeled with "slide show", main images corresponding to the thumbnail images displayed in a list on lower LCD 120 are displayed on upper LCD 110 as being switched under prescribed rules or randomly (that is, slide show is carried out). Here, various effects may be provided to the displayed images. Alternatively, as the user uses stylus pen 177 or the like to perform an operation to touch operation image 214 labeled with "shoot with camera," transition to screen display for picking up an image with the use of a pair of outer cameras 131L and 131R (see Fig. 2A) or inner camera 133 (see Fig. 1) is made. Further, as the user uses stylus pen 177 or the like to perform an operation to touch operation image 216 labeled with "setting", transition to screen display for making various settings in connection with the "viewing mode" is made.

### <I. Album Creation Mode>

Processing in the "album creation mode" (state ST5) shown in Fig. 9 will now be described.

As described above, in the "album creation mode," the user can select any image for compiling images as one "album". This album created by the user is output as album data. This album data can be reproduced on game device 1 used by the user who created the album, or the album data itself can also be passed to another game device, a personal computer or the like. In this case, not only the user who created the album but also another user having relation with the user can also see the album on his/her own game device 1.

In particular, in the present embodiment, voice and sound (sound effect) at the time of reproduction can be associated with each image constituting the album. Namely, in reproduction of the album data, each time a displayed image changes, sound effect associated with each image is reproduced. Since this sound effect can independently be associated with each image, a degree of freedom in creating an album can be enhanced from a point of view of the user.

More specifically, in the "album creation mode," the following five types of processing can mainly be performed.
(1) Material selection processing: selection of images to be included in the album
(2) Sound effect association processing: selection of voice and sound reproduced along with reproduction of images
(3) Graffiti processing: addition of an object to an image
(4) Preview processing: preview display of an album being created
(5) Album data output processing: generation/output of album data

Details of such processing will be described hereinafter.

### (i1: Material Selection Processing)

In the material selection processing, an image to be included in an album is selected. In particular, in the present embodiment, in addition to a function allowing completely arbitrary selection by the user, a function allowing automatic initial selection of an image to be included (hereinafter also referred to as an "image of interest," for distinction from other images that are not selected) under some kind of selection rules (automatic image selection).

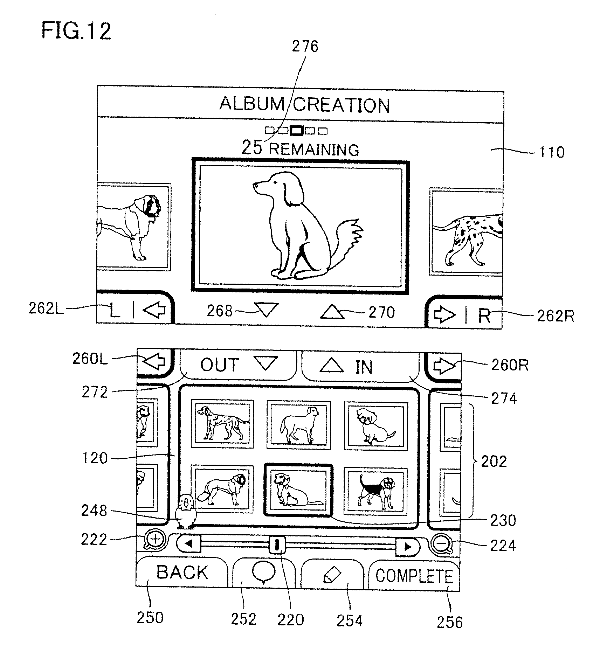

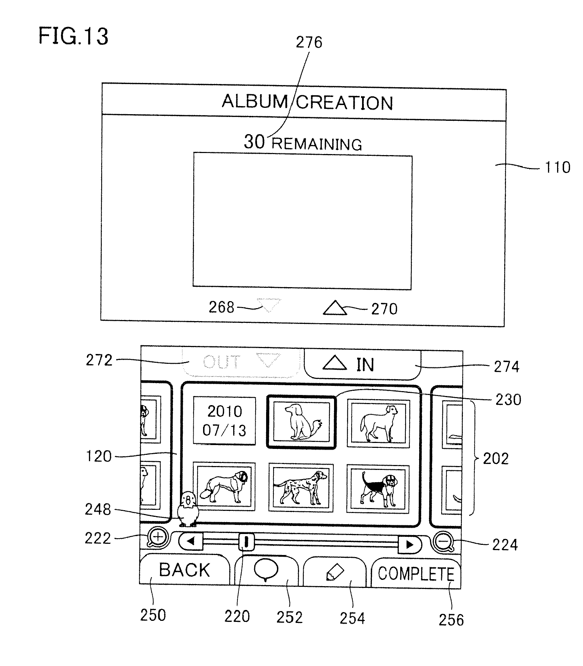

Fig. 11 shows a screen example of the "album creation mode" (state ST5) shown in Fig. 9. Fig. 12 shows a screen example displayed after an operation to touch an operation image 242 shown in Fig. 11 has been performed. Fig. 13 shows a screen example displayed after an operation to touch an operation image 244 shown in Fig. 11 has been performed.

As transition to the "album creation mode" is made, switching to screen display as shown in Fig. 11 is made. As shown in Fig. 11, initially, a user interface inquiring of the user about whether to make automatic image selection or not is displayed on lower LCD 120. Namely, together with a message image 240 indicating that "shall I create album?", operation image 242 permitting automatic image selection, operation image 244 for skipping automatic image selection, and an operation image 246 indicating end of the "album creation mode" are displayed.

As the user uses stylus pen 177 or the like to perform an operation to touch operation image 242 labeled with "yes, please", one theme is selected for display (not shown) from among a plurality of themes set in advance. Thereafter, based on the selected theme, transition to screen display as shown in Fig. 12 which will be described later is made. Alternatively, as the user uses stylus pen 177 or the like to perform an operation to touch operation image 244 labeled with "I do it myself," transition to screen display as shown in Fig. 13 which will be described later is made.

Further alternatively, as the user uses stylus pen 177 or the like to perform an operation to touch operation image 246 labeled with "quit", the screen returns to screen display as shown in Figs. 10A and 10B.

Referring to Fig. 12, when processing for automatic image selection is performed, under the selection rules randomly defined or set by the user in advance, a prescribed number of images are selected from among images saved in game device 1, as images of interest to be included in the album. It is noted that, during processing for automatic image selection, such an effect that a bird object 248 holds and carries an image to the album may be provided.

For instance, in the example shown in Fig. 12, the number of images that can be included in one album is set to 30 at the maximum, and Fig. 12 shows such a state that five images have initially been selected. Therefore, a message image 276 indicating that the remaining number of images that can be included in the album is 25 is shown on upper LCD 110. As will be described later, in accordance with the number of images included in the album, the number displayed in message image 276 or the like is sequentially updated.

An image selected as the image of interest to be included in the album is displayed on upper LCD I 10. On this upper LCD 110, an image selected from among images of interest included in the album being created is displayed in a largest size and at least a part of two images of interest adjacent to the selected image of interest is also displayed on upper LCD 110. It is noted that, for the sake of convenience of creation of the album, images of interest included in the album being created are ordered and display or the like is provided in accordance with this order.

In accordance with a procedure as shown below, an image desired by the user can be added to the album being created or an unnecessary image of interest can be deleted from the album being created.

On lower LCD 120, as in the "viewing mode" or the like shown in Figs. 10A and 10B, a listing image 202 including thumbnail images corresponding to images saved in game device 1 is displayed. In addition, in an upper portion of lower LCD 120, movement indication images 260L and 260R for guiding an operation to change selected images of interest are displayed. These movement indication images 260L and movement indication image 260R graphically give notification of contents of instructions allocated to user's operations of L button 162L and R button 162R, respectively.

As the user presses L button 162L once, a column of images of interest displayed on upper LCD 110 moves to the left as a whole. Then, a display position of a selected target moves to an image of interest located on the right of the image of interest selected before the touch operation. Namely, a column of images of interest displayed on upper LCD 110 moves (shifts) to the left by the number of times of pressing of L button 162L by the user. Similarly, as the user presses R button 162R once, a column of images of interest displayed on upper LCD 110 moves to the right as a whole. Then, a display position of a selected target moves to an image of interest located on the left of the image of interest selected before the touch operation.

It is noted that an operation the same as in the case of pressing of L button 162L or R button 162R can be performed also by the user's operation of touch panel 122. Namely, as the user uses stylus pen 177 or the like to perform an operation to touch movement indication image 260L showing an arrow pointing to the left, as in the case of pressing of L button 162L, a column of images of interest displayed on upper LCD 110 moves to the left as a whole. Alternatively, as the user uses stylus pen 177 or the like to perform an operation to touch movement indication image 260R showing an arrow pointing to the right, as in the case of pressing of R button 162R, a column of images of interest displayed on upper LCD 110 moves to the right as a whole.

Independently of selection of images of interest included in the album being created as described above, the user can change a position of selected display image 230 displayed as superimposed on listing image 202. Namely, as the user operates cross-shaped button 161, the user can move selected display image 230 and select a thumbnail image corresponding to an image of interest (main image) of which addition to the album being created is desired.

As the user presses operation button 162A (see Fig. 1) while selected display image 230 is set at a position corresponding to a target thumbnail image, a main image corresponding to the selected thumbnail image is added as a new image of interest at a position adjacent to the selected image of interest. It is noted that the added image of interest (main image) is inserted in between the selected image of interest and the image of interest located on its immediate left, or alternatively it may be inserted in between the selected image of interest and the image of interest located on its immediate right.

On the other hand, as the user presses operation button 162B (see Fig. 1) while the user selects an image of interest of which deletion from the album being created is desired by pressing L button 162L or R button 162R, the selected image of interest is deleted from the album being created. As this image of interest is deleted, the order provided to the images of interest included in the album being created is updated.

It is noted that a button for performing an operation to add a new image of interest (main image) to images of interest in the album is not limited to operation button 162A and other buttons may be made use of. Similarly, a button for performing an operation to delete an image of interest from the album is not limited to operation button 162B and other buttons may be made use of.

Further, as the user uses stylus pen 177 or the like to perform an operation to touch an operation image 272 labeled with "out", as in the case of pressing of operation button 162B, the selected image of interest being displayed on upper LCD 110 is deleted from the album being created. On the other hand, as the user uses stylus pen 177 or the like to perform an operation to touch an operation image 274 labeled with "in'", as in the case of pressing of operation button 162A, a main image corresponding to the thumbnail image selected in lower LCD 120 is added to the album being created.

It is noted that upper LCD 110 displays indicator images 268 and 270 notifying the user of an operation corresponding to deletion and addition of a main image, in correspondence with operation image 272 and operation image 274 respectively. In addition, upper LCD 110 displays indicator images 262L and 262R notifying the user of contents of operations allocated to L button 162L and R button 162R respectively.

Further, lower LCD 120 displays an operation image 250 indicating end of the material selection processing to return to a menu screen (Fig. 11), an operation image 252 indicating start of sound effect association processing, a touch operation image 254 indicating start of graffiti processing, and an operation image 256 indicating completion of the album creation processing.

As the user uses stylus pen 177 or the like to perform an operation to touch operation image 252 in which a picture of an audio box is shown, sound effect association processing which will be described later is started. Alternatively, as the user uses stylus pen 177 or the like to perform an operation to touch operation image 254 in which a picture of a pencil is shown, graffiti processing which will be described later is started.

Furthermore, as the user uses stylus pen 177 or the like to perform an operation to touch operation image 256 labeled with "complete", preview processing and album data output processing are started. This album data output processing will be described later.

In contrast, when automatic image selection is skipped in Fig. 11, transition to screen display as shown in Fig. 13 is made. As automatic image selection is skipped, such a state that no image of interest in the album is selected as shown in Fig. 13 is set as the initial state. At this time point, since no image of interest included in the album being created exists, the user's operation of L button 162L and R button 162R is invalidated, and movement indication images 260L and 260R and indicator images 262L and 262R as shown in Fig. 12 are not displayed.

It is noted that, as the user adds an image of interest to the album being created in accordance with the procedure as described above, the user's operation of L button 162L and R button 162R is validated and movement indication images 260L and 260R and indicator images 262L and 262R are accordingly displayed.

### (i2: Sound Effect Association Processing)

In the sound effect association processing, voice and sound at the time or reproduction (sound effect) can be associated with each image constituting the album.

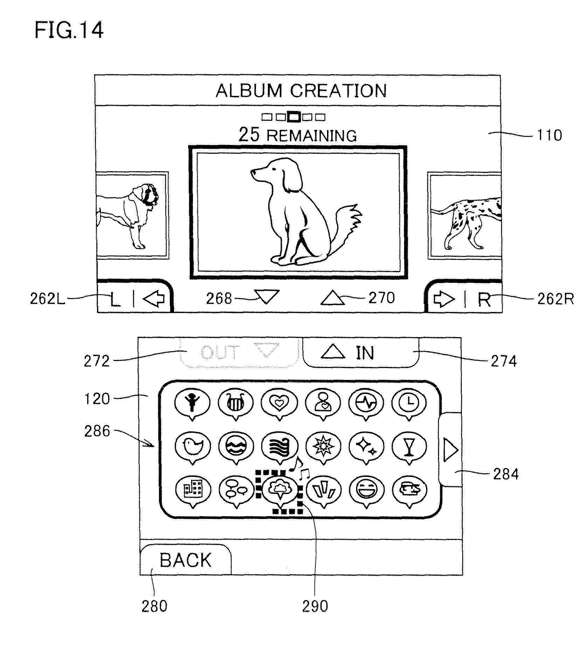

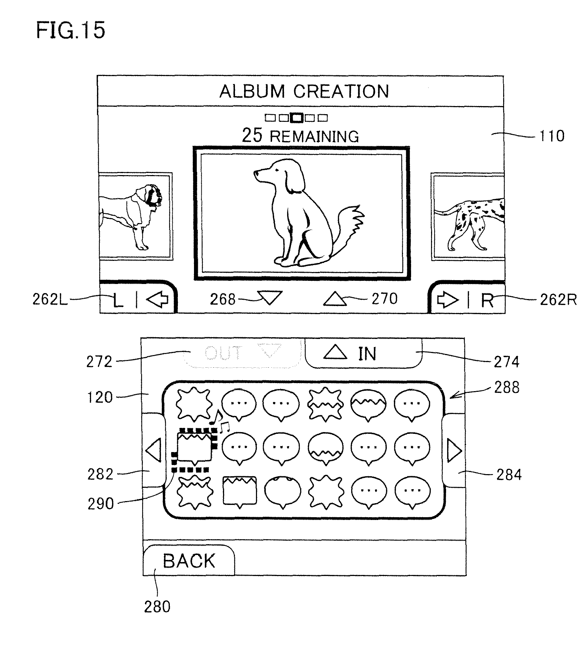

Figs. 14 and 15 each show a screen example in the sound effect association processing according to the embodiment of the present invention. As an operation to touch operation image 252 is performed in screen display shown in Fig. 12 or 13, switching to screen display as shown in Fig. 14 or 15 is made.

In screen display shown in Figs. 14 and 15, the user selects an image of interest to be subjected to the sound effect association processing from among the images of interest included in the album, selects voice and sound to be associated with each image of interest, and further performs actual association processing. In Figs. 14 and 15, contents displayed on lower LCD 120 are different from those in screen display as shown in Figs. 12 and 13. Namely, in Figs. 14 and 15, lower LCD 120 displays listing displays 286 and 288 including audio icons indicating voice and sound that can be associated with the images of interest.

Namely, an image of interest showing a main image included in the album (first object) is displayed in the display region of upper LCD 110, and a thumbnail image showing a main image saved in game device 1 (second object) is displayed in the display region of lower LCD 120.

In the present embodiment, in addition to voice and sound saved in advance in game device 1, arbitrarily selected voice and sound from among voices and sounds arbitrarily recorded by the user can be associated with a main image. Namely, listing display 286 shown in Fig. 14 displays voices and sounds saved in advance in game device 1 in a two-dimensionally selectable manner and a picture of each audio icon expresses contents of corresponding voice and sound. In addition, listing display 288 shown in Fig. 15 displays voices and sounds recorded by the user in a two-dimensionally selectable manner, and a picture of each audio icon expresses an amount of recording of corresponding voice and sound. More specifically, if a time period for recording of corresponding voice and sound is longer, such a picture that a container contains more content is employed as the audio icon included in listing display 288. On the other hand, if a time period for recording of corresponding voice and sound is shorter, such a picture that a container contains less content is employed as the audio icon included in listing display 288. It is noted that recording of voice and sound by the user can be carried out by using microphone 153 (see Fig. 4).

Thus, a plurality of audio icons are displayed in a selectable manner in the display region of lower LCD 120.

In addition, a larger number of audio candidates other than those as shown in Figs. 14 and 15 may be prepared, and in that case, an operation image 282 or an operation image 284 for switching listing display of voice and sound are displayed. Namely, in screen display shown in Fig. 14. as the user uses stylus pen 177 or the like to perform an operation to touch operation image 284, display contents on lower LCD 120 are switched from listing display 286 to listing display 288 shown in Fig. 15. Similarly, in screen display shown in Fig. 15. as the user uses stylus pen 177 or the like to perform an operation to touch operation image 282, display contents on lower LCD 120 are switched from listing display 288 to listing display 286 shown in Fig. 14.

A selected display image 290 is displayed as superimposed on listing display 286 shown in Fig. 14 and listing display 288 shown in Fig. 15. A position of this selected display image 290 on listing displays 286 and 288 varies in response to the user's operation of cross-shaped button 161 (see Fig. 1). Voice and sound corresponding to the audio icon indicated by this selected display image 290 is the selected voice and sound.

It is noted that voice and sound corresponding to the audio icon selected on listing display 286 or 288 may be reproduced. Namely, while listing display 286 or 288 is displayed, the user arbitrarily moves selected display image 290 so as to select voice and sound to be associated with each image included in the album. Here, as the contents thereof are sequentially reproduced, the user can also search for appropriate sound effect while checking voice and sound.

An actual user's operation involved with selection of voice and sound associated with each image in the album and the association processing performed will now be described.

In game device 1 according to the present embodiment, the user who desires to associate sound effect with a certain image of interest uses stylus pen 177 or the like to select a target audio icon included in displayed listing display 286 or 288 on lower LCD 120 and thereafter performs such an operation as "flicking" the selected audio icon toward upper LCD 110. Then, the main image corresponding to the image of interest (displayed on upper LCD 110) selected in advance from among the images of interest included in the album and voice and sound corresponding to the selected audio icon (sound effect) are associated with each other.

Namely, touch panel 122 representing accepting means for accepting the user's series of position indication operations in the display region of lower LCD 120 is attached to lower LCD 120. Then, based on the position indicated by the series of position indication operations in the display region of lower LCD 120 accepted by this touch panel 122, the audio icon (second object) indicating voice and sound included in listing display 286 or 288 is selected. In addition, based on subsequent variation in indicated position accepted by touch panel 122, processing for associating the main image corresponding to the image of interest (first object) displayed on upper LCD 110 and voice and sound corresponding to the selected audio icon with each other is performed.

It is noted that the image of interest displayed on upper LCD 110 is selected prior to an input operation different from such user's series of position indication operations. Namely, an image of interest to be associated is selected first, and then the image of interest selected first (main image) and voice and sound are associated with each other through the user's series of position indication operations.

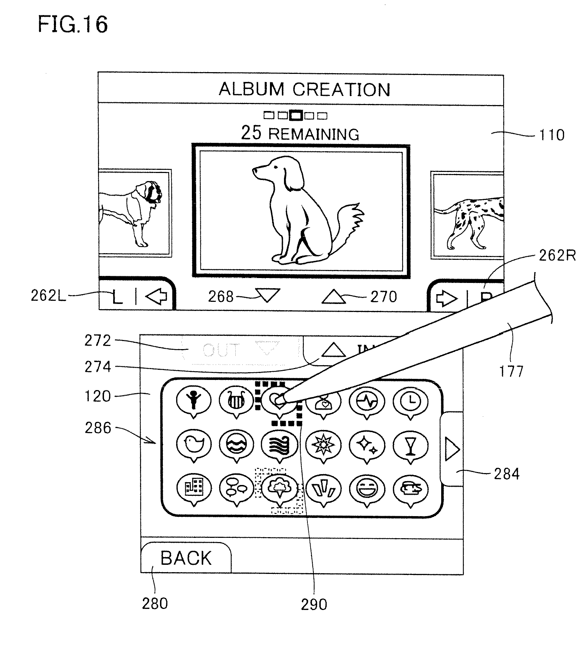

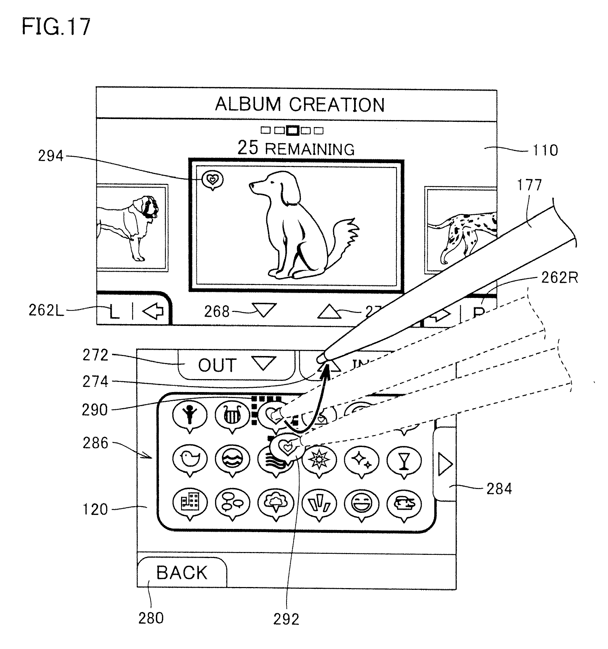

Such an operation for performing association processing using stylus pen 177 or the like will be described in further detail with reference to Figs. 16 and 17.

Figs. 16 and 17 each show an operation example in the sound effect association processing according to the present embodiment. Referring to Fig. 16, as the user uses stylus pen 177 or the like to touch a position corresponding to the target audio icon included in listing display 286 displayed on lower LCD 120 (performs a position indication operation), the audio icon corresponding to the touched position is selected. Namely, the audio icon is selected based on the position where the user started touching with stylus pen 177 or the like, of touch panel 122 attached to lower LCD 120, that is, an indication start position. Here, when a new audio icon is selected, a position of display of selected display image 290 is also updated (moved) for notification of that fact.

It is noted that an audio icon may be selected based on some characteristic movement in the user's series of position indication operations. For example, when the user rests at any position for a prescribed period of time or longer while he/she continues the position indication operation (maintains a touching state), the audio icon corresponding to the rest position may be selected.

As some kind of audio icon is selected, voice and sound corresponding to the selected audio icon may be reproduced as described above. Here, reproduced voice and sound is emitted from speaker 151.

In succession, as shown in Fig. 17, as the user moves stylus pen 177 or the like while maintaining the touching state, the selected audio icon is drawn out (dragged) based on this subsequent variation in indicated position. Namely, such an effect that the selected audio icon is moved taken together by stylus pen 177 is provided.

Thereafter, as the user moves stylus pen 177 or the like upward, that is, in a direction toward upper LCD 110, while maintaining the touching state, voice and sound corresponding to the selected audio icon is associated with the main image corresponding to the image of interest displayed on upper LCD 110.

From a point of view of improvement in usability or prevention of an erroneous operation, only when variation in subsequent indicated position caused by the user's operation on touch panel 122 satisfies a prescribed condition, voice and sound corresponding to the audio icon may be associated with the main image.

This prescribed condition can include a condition relating to at least one of a moving speed and an amount of displacement in the user's series of position indication operations (a single operation performed, with the state of touching touch panel 122 being maintained).

For example, the condition may include such a condition as whether or not the indicated position varies relative to the display region of lower LCD 120, in a direction in which the display region of upper LCD 110 is present, in the user's series of position indication operations. In other words, association processing may be performed only when the user temporally moves the position of touch in the direction toward upper LCD 110 (upward of the sheet surface) while maintaining the state of touching touch panel 122.

In such a case, normally, the user who desires to associate some kind of voice and sound selects the audio icon and then performs such an operation as "flicking" toward upper LCD 110 so as to complete the series of position indication operations. Therefore, such a condition that the indicated position varies relative to the display region of lower LCD 120 in the direction in which the display region of upper LCD 110 is present, within a prescribed period of time immediately before the end of the user's series of position indication operations, may be set.

As a specific mounting method, such processing as storing change over time in a detected two-dimensional coordinate value from the time point of detection of the user's operation by touch panel 122 until the end thereof and determining whether or not a difference between lowest and highest values of the two-dimensional coordinate values over a length of a prescribed period of time in the past since the end of detection of the user's operation (the timing of change from a state in which the user's operation was detected to a state in which the user's operation is no longer detected) exceeds a prescribed threshold value can be adopted.

Alternatively, whether an amount of change over time in detected two-dimensional coordinate value while touch panel 122 detects the user's operation exceeds a prescribed threshold value or not may be determined.

As some kind of voice and sound is associated with a main image included in the album being created through the operation as described above, an icon 294 which is a notification image for indicating the associated state is displayed as superimposed on the corresponding image of interest. Alternatively, icon 294 may be displayed in proximity to the image of interest.

This icon 294 is preferably substantially the same in design as the audio icon corresponding to voice and sound associated with the image of interest, in order for the user to apparently grasp which voice and sound is brought in correspondence with the image of interest.

In game device 1 according to the present embodiment, even when some kind of voice and sound has already been associated with a main image, another voice and sound can be associated therewith in response to the user's new series of position indication operations. Namely, in game device 1 according to the present embodiment, even when another voice and sound has already been associated with the main image included in the album, association with the voice and sound associated in advance can be canceled in response to the user's series of position indication operations and voice and sound corresponding to the newly selected audio icon is associated with the main image of interest.

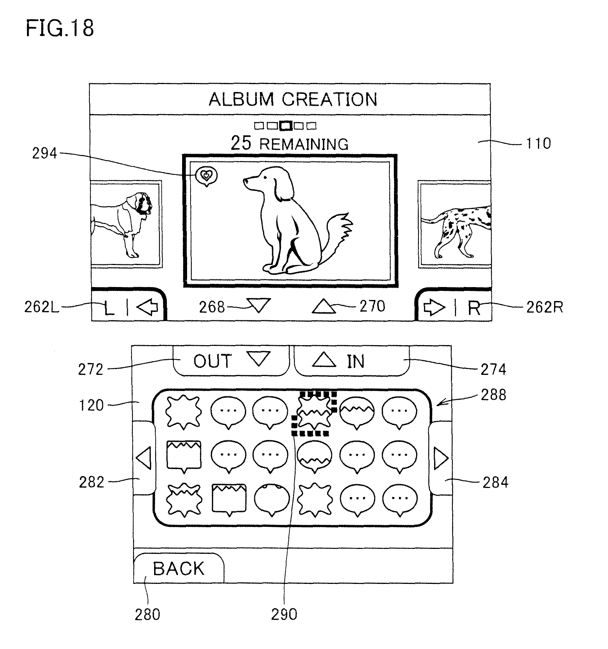

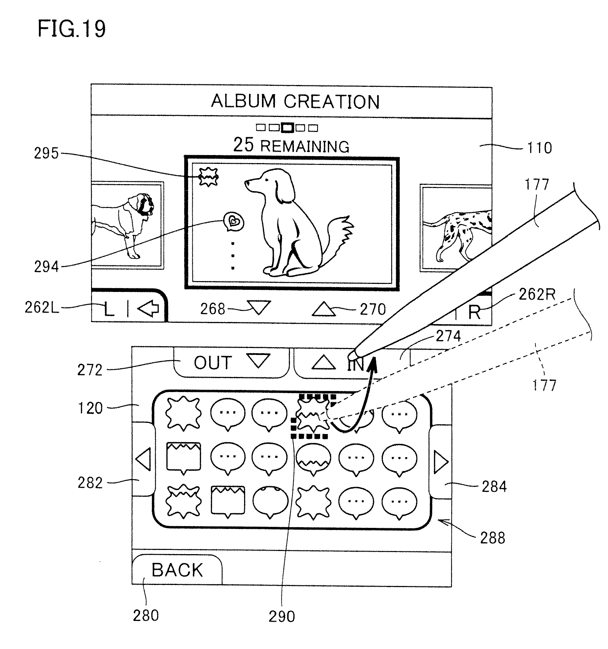

The user can thus freely change voice and sound to be associated. Such processing will be described in further detail with reference to Figs. 18 and 19.

Figs. 18 and 19 each show another operation example in the sound effect association processing according to the present embodiment. Referring to Fig. 18, it is assumed that voice and sound has already been associated with the image of interest in the album through the user's operation as described above. Here, icon 294 is displayed as superimposed on the image of interest displayed on upper LCD 110.

It is assumed in this state that the user uses stylus pen 177 or the like to select another audio icon included in displayed listing display 288 and thereafter performs such an operation as "flicking" the selected audio icon toward upper LCD 110 as shown in Fig. 19. If this operation satisfies a prescribed condition, icon 294 displayed as superimposed on the image of interest displayed on upper LCD 110 is deleted from the screen with such an effect that icon 294 "falls" down to the lower side of the screen, and an icon 295 corresponding to a new audio icon selected by the user is displayed as superimposed on the image of interest.

In game device 1 according to the present embodiment, in addition to the user's series of position indication operations using stylus pen 177 or the like as described above, another input method is also prepared.

Namely, referring again to Figs. 14 to 19, operation images 272 and 274 are displayed on lower LCD 120 as in Figs. 12 and 13 above. Then, as the user uses stylus pen 177 or the like to perform an operation to touch operation image 274 labeled with "in", voice and sound corresponding to the audio icon selected in lower LCD 120 is associated with the main image corresponding to the image of interest displayed on upper LCD 110. On the other hand, as the user uses stylus pen 177 or the like to perform an operation to touch operation image 272 labeled with "out", voice and sound associated with the main image corresponding to the image of interest displayed on upper LCD 110 is deleted. Namely, association of voice and sound with the main image corresponding to the image of interest is canceled.

It is noted that a position of selected display image 290 displayed as superimposed on listing display 286 or 288 can be varied in response to the user's operation of cross-shaped button 161 (see Fig. 1). Namely, the user can select voice and sound to be associated (audio icon) by operating cross-shaped button 161.

In addition, as the user presses operation button 162A, as in the case where an operation to touch operation image 274 labeled with "in" is performed, voice and sound corresponding to the audio icon selected on lower LCD 120 is associated with the main image corresponding to the image of interest displayed on upper LCD 110. Alternatively, as the user presses operation button 162B, as in the case where an operation to touch operation image 272 labeled with "out" is performed, voice and sound associated with the main image corresponding to the image of interest displayed on upper LCD 110 is deleted.

Through the processing as above, the user can freely associate voice and sound with each image of interest included in the album being created.

### (i3: Graffiti Processing)

In graffiti processing, the user can arbitrarily add an object to each image saved in game device 1. This graffiti processing is started as an operation to touch operation image 254 in screen display shown in Fig. 12 or 13 is performed.

The image generated in this graffiti processing, to which an object has been added, may overwrite the original image, however, the image is preferably saved as another piece of data. By saving the image changed by the user as another piece of data, the user can enjoy free processing of the image obtained through image pick-up or the like and can arbitrarily select an image constituting the album from among candidates including the processed image in addition to the original image.

Further, when the graffiti processing is performed on the image of interest included in the album being created, the processed image (the image to which an object has been added) may be added as a new image of interest included in the album being created (with the original image of interest being maintained).

As one specific example of such graffiti processing, the user can use stylus pen 177 or the like to add any graphics or character onto an image. In this case, preferably, a user interface allowing arbitrary change in thickness, color, shape, and the like of an added graphics or character is also provided.

By way of another example, the user can use stylus pen 177 or the like to arrange an object (stamp) at any position over an image. In this case, preferably, a user interface allowing arbitrary change in a type or the like of a stamp to be arranged is also provided.

The graffiti processing according to the present embodiment can adopt various forms of processing of an image, without limited to the contents described above.

### (i4: Preview Processing)

In preview processing, preview display of the album being created is provided. Namely, the user can check beforehand, contents that will be displayed when album data generated from the album being created is reproduced.

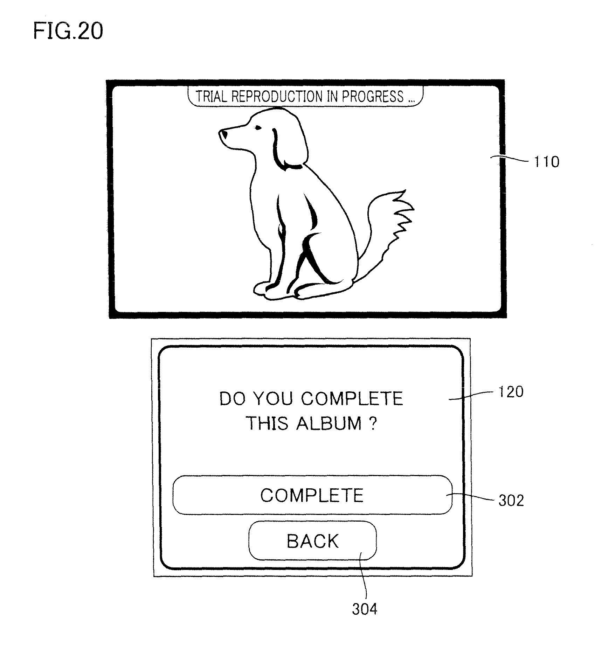

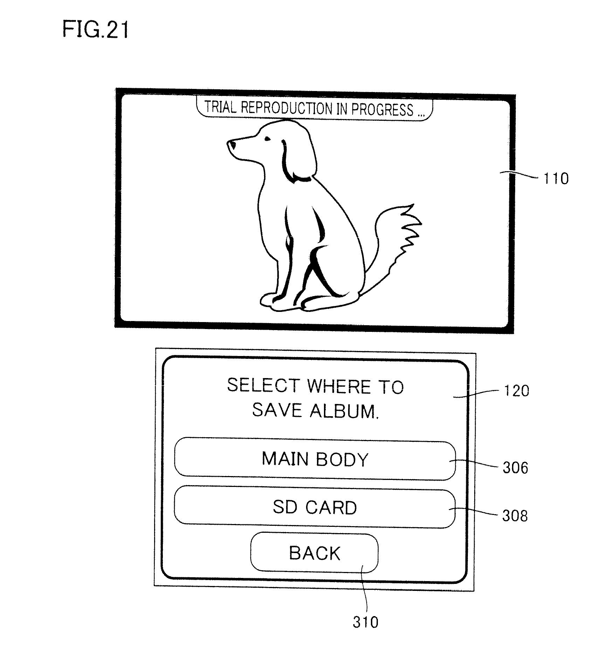

Figs. 20 and 21 each show a screen example in the preview processing according to the embodiment of the present invention. The preview processing is started when an operation to touch operation image 256 in screen display shown in Fig. 12 or 13 is performed. Namely, when an operation to touch operation image 256 in screen display shown in Fig. 12 or 13 is performed, switching to screen display as shown in Fig. 20 is made.

Referring to Fig. 20, on upper LCD 110, contents in the album being created are displayed. Namely, on upper LCD 110, images included in the album being created are displayed as being switched over time in a prescribed order. Here, together with display of the images, voice and sound associated in the sound effect association processing is also reproduced. It is noted that, in order to notify the user that preview display is provided, a message of "trial reproduction in progress ..." is displayed on upper LCD 110.

In addition, on lower LCD 120, together with a message image "do you complete this album?", an operation image 302 indicating completion of the album (generation and output of the album data) and an operation image 304 indicating stop of preview processing are displayed.

Namely, as the user uses stylus pen 177 or the like to perform an operation to touch operation image 302 labeled with "complete", transition to screen display as shown in Fig. 21 is made. Alternatively, as the user uses stylus pen 177 or the like to perform an operation to touch operation image 304 labeled with '"back", the screen returns to screen display as shown in Fig. 12 or 13.

In screen display shown in Fig. 21, the user is inquired about where to save the album data generated in album data output processing which will be described later. Namely, the output album data is saved in the main body of game device 1 or a storage device attached to game device 1.

In screen display shown in Fig. 21, on lower LCD 120, together with a message image "select where to save album," an operation image 306 indicating that non-volatile memory 136 (see Fig. 4) contained in game device 1 is to be set as a saving destination, an operation image 308 indicating that memory card 173 (see Fig. 1; typically, an SD card) attached to game device 1 is to be set as the saving destination, and an operation image 310 indicating return to screen display shown in Fig. 20 are displayed.

Namely, as the user uses stylus pen 177 or the like to perform an operation to touch operation image 306 labeled with "main body", non-volatile memory 136 is set as an output destination (saving destination) of the album data and then the album data output processing which will be described later is started. Alternatively, as the user uses stylus pen 177 or the like to perform an operation to touch operation image 308 labeled with "SD card", memory card 173 is set as an output destination (saving destination) of the album data and then the album data output processing which will be described later is started.

### (i5: Album Data Output Processing)

In the album data output processing, album data is generated from the created album and the album data is output to the saving destination set in advance. At the time of generation of this album data, the user can arbitrarily designate attribute information on each piece of album data (typically, time and day of creation, a title, an icon for display, and the like).

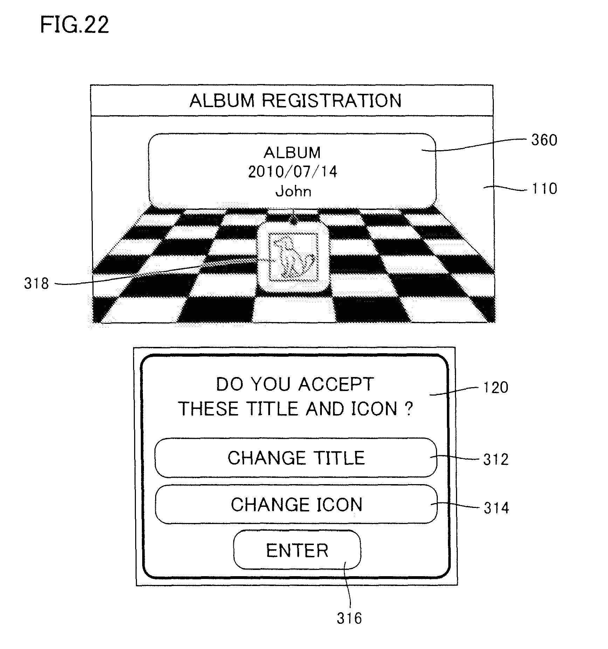

Figs. 22 to 26 each show a screen example in the album data output processing according to the embodiment of the present invention. In screen display shown in Fig. 21, as an operation to touch operation image 306 or operation image 308 is performed, transition to screen display shown in Fig. 22 is made and the album data output processing is started.

In screen display shown in Fig. 22, a message image 360 and an icon 318 showing attribute information provided to the generated album data are displayed on upper LCD 110. This message image 360 shows the time and day of creation and a title of the album. Icon 318 corresponds to an icon at the time when album data is selectably displayed in the not-shown HOME menu.

Lower LCD 120 provides a user interface for changing these title and icon. More specifically, on lower LCD 120, an operation image 312 indicating change in title, an operation image 314 indicating change in icon, and an operation image 316 indicating completion of the album data output processing are displayed.

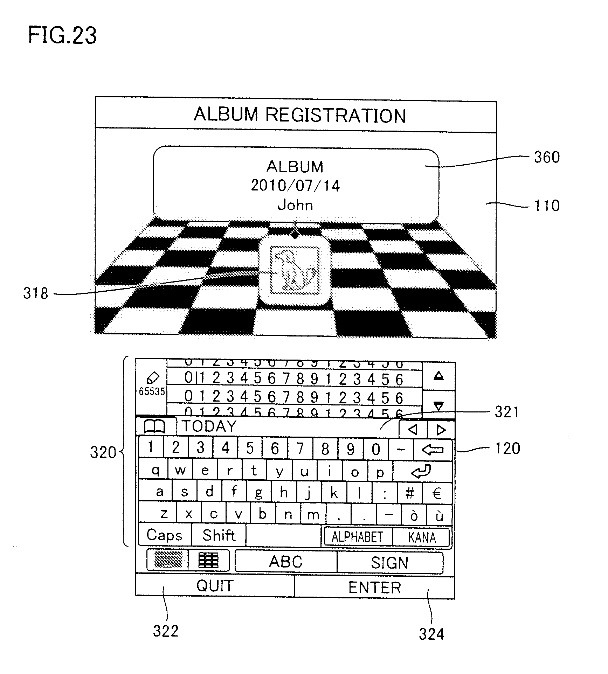

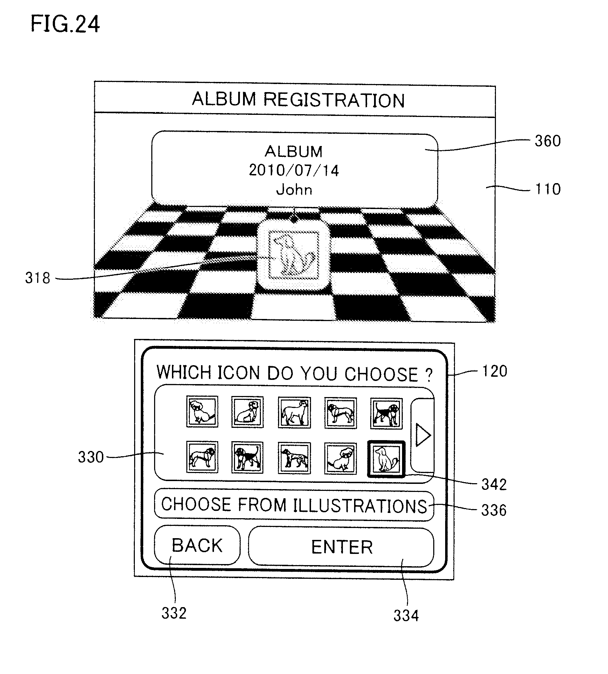

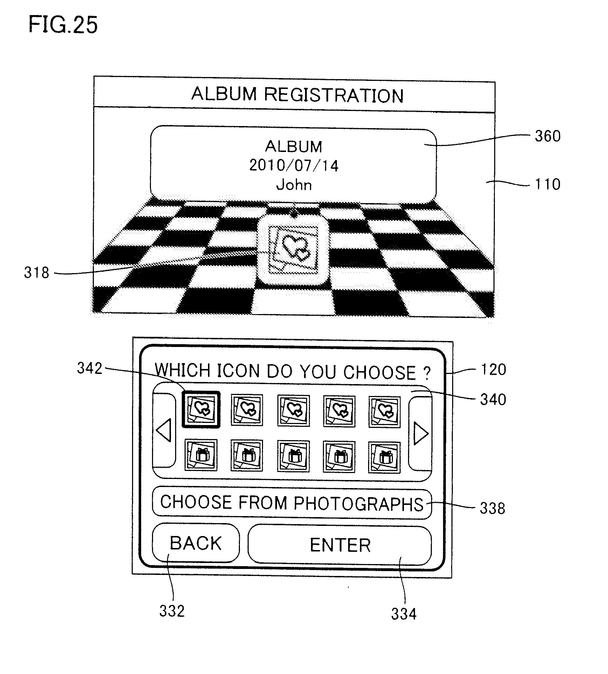

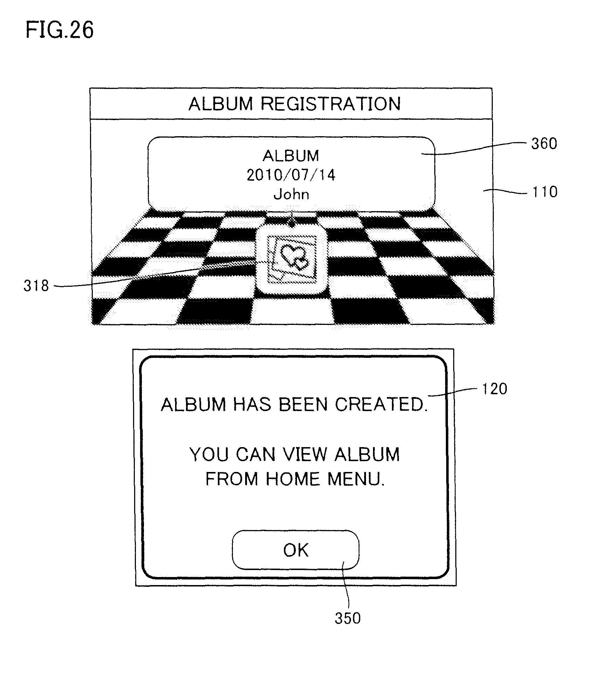

Namely, as the user uses stylus pen 177 or the like to perform an operation to touch operation image 312 labeled with "change title", transition to screen display as shown in Fig. 23 is made. Alternatively, as the user uses stylus pen 177 or the like to perform an operation to touch operation image 314 labeled with "change icon", transition to screen display as shown in Fig. 24 or 25 is made. Alternatively, as the user uses stylus pen 177 or the like to perform an operation to touch operation image 316 labeled with "enter", generation and output of the album data is carried out and thereafter transition to screen display as shown in Fig. 26 is made.

In screen display shown in Fig. 23, lower LCD 120 provides a character input interface for changing the title. More specifically, lower LCD 120 displays a character input image 320 like a keyboard, an operation image 322 indicating interruption of title change processing, and an operation image 324 indicating entry of title change.

Namely, as the user uses stylus pen 177 or the like to perform an operation to touch each character to constitute a desired title, that is included in character input image 320, the input character is reflected on a message image 321. Alternatively, as the user uses stylus pen 177 or the like to perform an operation to touch operation image 322 labeled with "quit", a character string (a character string displayed in message image 321) that has been input so far is cleared and the screen returns to screen display as shown in Fig. 22. Alternatively, as the user uses stylus pen 177 or the like to perform an operation to touch operation image 324 labeled with "enter", a character string (a character string displayed in message image 321) that has been input as the title is entered and the screen returns to screen display as shown in Fig. 22. Here, the title after change is reflected also on the display contents in message image 360.

In screen display shown in Figs. 24 and 25, lower LCD 120 provides an input interface for selecting an icon to be provided to the album data. More specifically, on lower LCD 120, a listing image 330 or 340 including icons that can be provided to the album data is displayed. Listing image 330 shown in Fig. 24 includes icons (thumbnail images) obtained from the images of interest included in the corresponding album, and listing image 340 shown in Fig. 25 includes icons prepared in advance.

Then, a selected display image 342 is displayed over these listing images 330 and 340. A position of this selected display image 342 varies in response to the user's operation of stylus pen 177 or the like or the user's operation of cross-shaped button 161 (see Fig. 1). An icon provided to icon data is selected by this selected display image 342.

Switching between Figs. 24 and 25 can mutually be made. More specifically, in screen display shown in Fig. 24, an operation image 336 indicating switch to screen display in Fig. 25 is displayed on lower LCD 120, and in screen display shown in Fig. 25, an operation image 338 indicating switch to screen display in Fig. 24 is displayed on lower LCD 120.

Namely, as the user uses stylus pen 177 or the like to perform an operation to touch operation image 336 labeled with "choose from illustrations" shown in Fig. 24, transition to screen display as shown in Fig. 25 is made. On the other hand, as the user uses stylus pen 177 or the like to perform an operation to touch operation image 338 labeled with "choose from photographs" shown in Fig. 25, transition to screen display as shown in Fig. 24 is made.

In screen display shown in Figs. 24 and 25, an operation image 332 indicating interruption of icon change processing and an operation image 334 indicating entry of icon change are displayed on lower LCD 120.

Namely, as the user uses stylus pen 177 or the like to perform an operation to touch operation image 332 labeled with "back", change in icon is not reflected but the screen returns to screen display as shown in Fig. 22. Alternatively, as the user uses stylus pen 177 or the like to perform an operation to touch operation image 334 labeled with "enter", the selected icon is reflected as an attribute value for the album data and then the screen returns to screen display as shown in Fig. 22.

In addition, in screen display shown in Fig. 22, as the user uses stylus pen 177 or the like to perform an operation to touch operation image 316 labeled with "enter", the album data is generated and the generated album data is saved in the saving destination selected in screen display shown in Fig. 21. In succession, transition to screen display shown in Fig. 26 is made.

In screen display shown in Fig. 26, a message that "album has been created" indicating that creation and output of the album data has been completed is displayed on lower LCD 120. In addition, on lower LCD 120, a message that "you can view album from HOME menu" guiding a method of reproducing the created album data is also displayed.

Moreover, in screen display shown in Fig. 26, an operation image 350 labeled with "OK" is also displayed, and as the user uses stylus pen 177 or the like to perform an operation to touch this operation image 350, the screen returns to screen display as shown in Figs. 10A and 10B.

### (i6: Data Structure of Album Data)

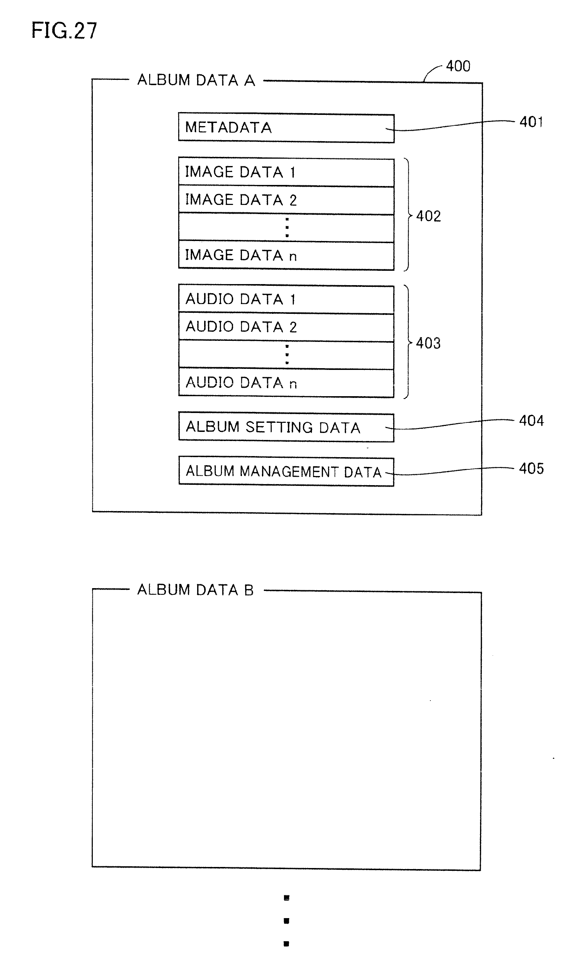

Fig. 27 shows a data structure of album data generated in game device 1 according to the present embodiment.

Referring to Fig. 27, each piece of album data 400 includes metadata 401, an image data group 402, an audio data group 403, album setting data 404, and album management data 405.

Metadata 401 includes information necessary for display of corresponding album data in the HOME menu.

Image data group 402 includes data for displaying images of interest constituting the album and it substantially corresponds to copy of image data for the images of interest saved in advance in game device 1. Similarly, audio data group 403 includes data for displaying sound effect associated with each image of interest constituting the album and it substantially corresponds to copy of audio data saved in advance in game device 1. Image data and audio data included in image data group 402 and audio data group 403 respectively are ordered, and association between the image of interest and sound effect is made in accordance with this order.

For reproduction in any environment, even in a case where the album includes the same images or voices and sounds, the album data preferably includes such image or audio data in a redundant manner.

Album setting data 404 includes attribute information set for the album (a title and an icon) and the like. Album management data 405 includes information for managing an order of reproduction of images of interest constituting the album and the like.

### <J. Processing Procedure>

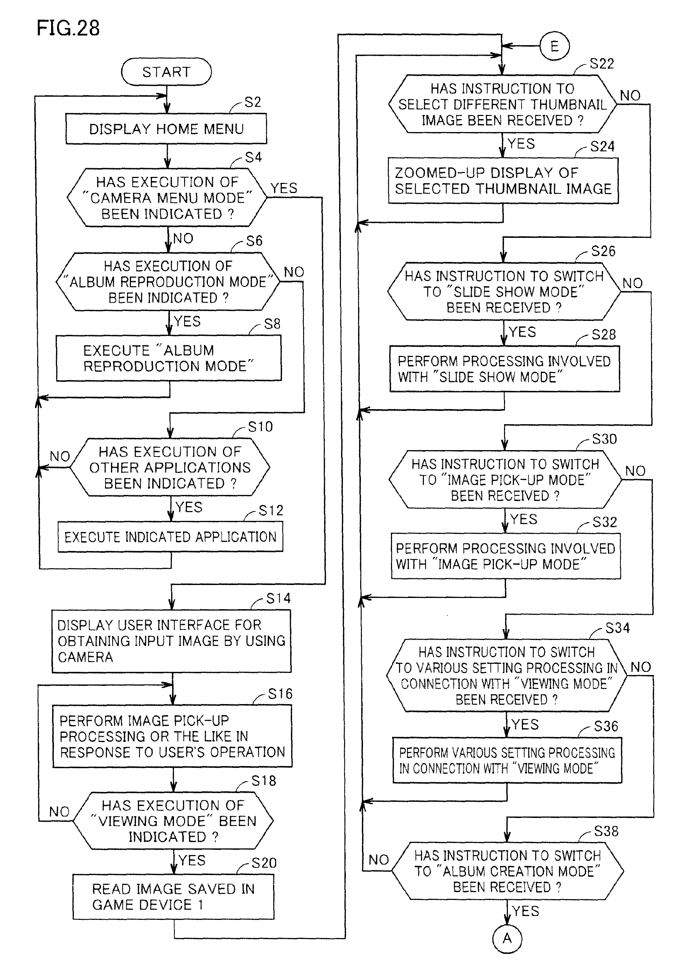

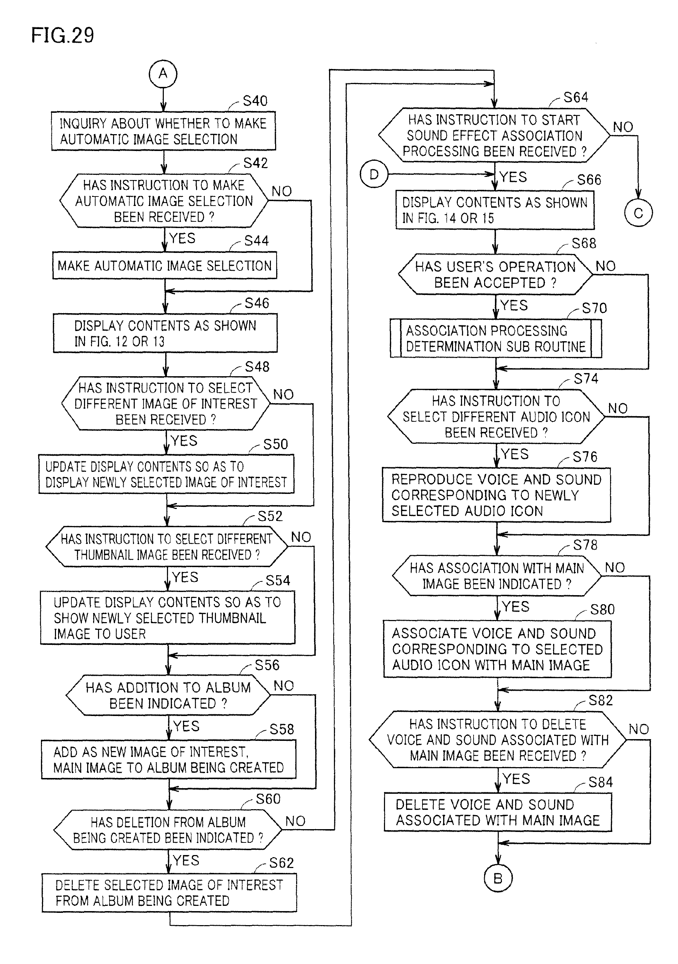

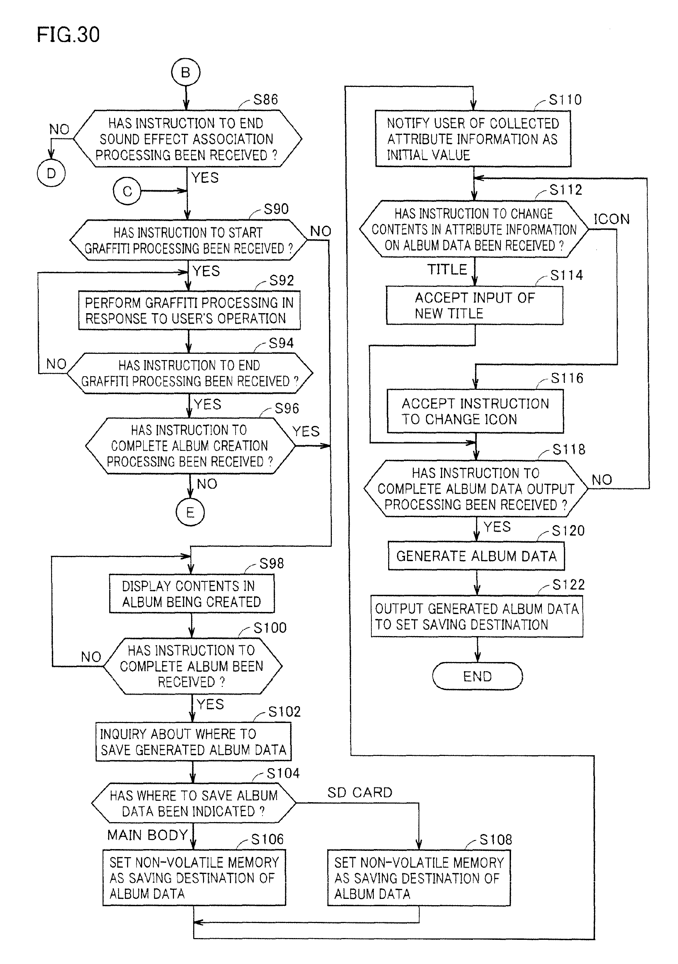

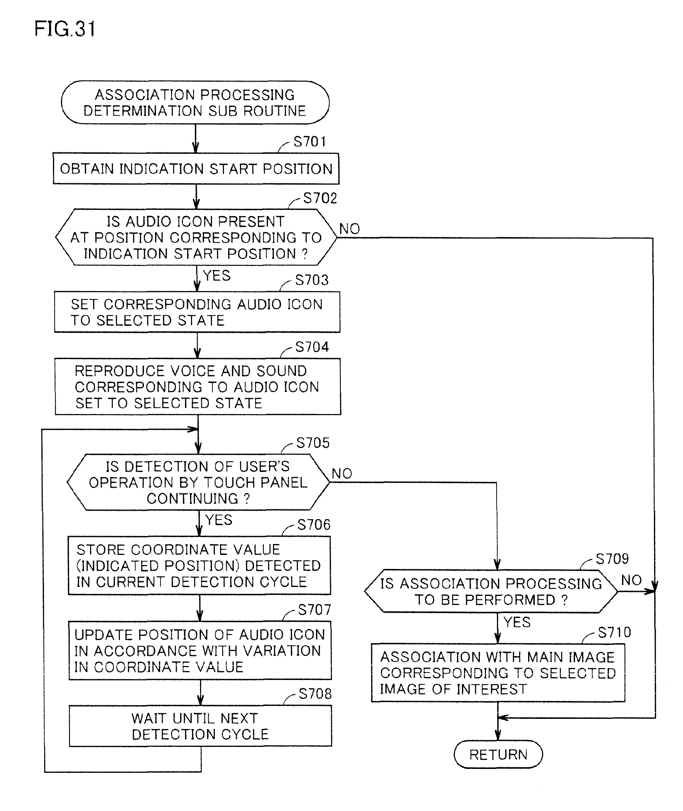

Figs. 28 to 30 are flowcharts of a main routine involved with display control processing provided in game device 1 according to the embodiment of the present invention. Fig. 31 is a flowchart of an association processing determination sub routine.

Each step in each flowchart shown in Figs. 28 to 31 is typically provided by operation processing unit 100 (Fig. 4) executing a program (instruction set). It is noted that operation processing unit 100 does not have to execute a single program but one application or a plurality of applications may be executed together with a program (or firmware) providing a basic OS (Operating System). In addition, the entirety or a part of processing shown below may be implemented by hardware.

### (j 1. Main Routine)

Referring to Figs. 28 to 30, operation processing unit 100 provides screen display of an image (not shown) corresponding to the HOME menu (step S2). Namely, as the initial state, it is assumed that the "HOME menu mode" (state ST1) shown in Fig. 9 is set. In succession, operation processing unit 100 determines whether execution of the "camera menu mode" has been indicated or not (step S4). When execution of the "camera menu mode" is indicated (YES in step S4), the process proceeds to step S 14.

When execution of the "camera menu mode" has not been indicated (NO in step S4), operation processing unit 100 determines whether execution of the "album reproduction mode" has been indicated or not (step S6). When execution of the "album reproduction mode" has been indicated (YES in step S6), operation processing unit 100 executes the "album reproduction mode" (step S8). Namely, transition to the "album reproduction mode" (state ST7) shown in Fig. 9 is made. After the "album reproduction mode" ends, the process returns to step S2.

When execution of the "album reproduction mode" has not been indicated (NO in step S6), whether execution of other applications has been indicated or not is determined (step S10). When execution of other applications has been indicated (YES in step S 10), operation processing unit 100 executes the indicated application (step S12). After the application ends, the process returns to step S2.

When execution of other applications has not been indicated (NO in step S10), the processing in step S2 and subsequent steps is repeated.

In step S14, operation processing unit 100 provides screen display of contents involved with processing for obtaining an input image with the use of a pair of outer cameras 131L and 131R (see Fig. 2A) or inner camera 133 (see Fig. 1) (step S14). Namely, operation processing unit 100 provides a user interface necessary for execution of the "image pick-up mode." Then, operation processing unit 100 performs image pick-up processing or the like in response to the user's operation (step S16).

In addition, operation processing unit 100 determines whether execution of the "viewing mode" (state ST4) has been indicated or not (step S18). When execution of the "viewing mode" (state ST4) has been indicated (YES in step S 18), processing in step S20 and subsequent steps is performed. In contrast, when execution of the "viewing mode" (state ST4) has not been indicated (NO in step S 18), processing in step S16 and subsequent steps is performed.

In step S20, operation processing unit 100 reads an image saved in game device 1 and provides display of contents as shown in Figs. 10A and 10B on upper LCD 110 and lower LCD 120. In succession, operation processing unit 100 determines whether an instruction to select a thumbnail image different from the currently selected thumbnail image from among thumbnail images displayed as listing image 202A has been received or not (step S22). When an instruction to select a thumbnail image different from the currently selected thumbnail image has been received (YES in step S22), operation processing unit 100 provides zoomed-up display of the selected thumbnail image on upper LCD 110 (step S24). Then, processing in step S22 and subsequent steps is repeated.

In contrast, when an instruction to select a thumbnail image different from the currently selected thumbnail image has not been received (NO in step S22), operation processing unit 100 determines whether an instruction to switch to the "slide show mode" (state ST6 shown in Fig. 9) has been received or not (step S26). Namely, whether a coordinate indication on operation image 212 shown in Figs. 10A and 10B has been provided or not is determined. When an instruction to switch to the "slide show mode" has been received (YES in step S26), operation processing unit 100 randomly orders images saved in game device 1 and provides switched display of each image on upper LCD 100 in that order every prescribed time. Operation processing unit 100 adds an effect based on setting contents designated in advance. Namely, operation processing unit 100 performs processing involved with the "slide show mode" (step S28). After processing involved with the "slide show mode" has ended, processing in step S22 and subsequent steps is repeated.

In contrast, when an instruction to switch to the "slide show mode" has not been received (NO in step S26), operation processing unit 100 determines whether an instruction to switch to the "image pick-up mode" (state ST3 shown in Fig. 9) has been received or not (step S30). Namely, whether a coordinate indication on operation image 214 shown in Figs. 10A and 10B has been provided or not is determined. When an instruction to switch to the "image pick-up mode" has been received (YES in step S30), operation processing unit 100 performs processing involved with the "image pick-up mode" (step S32). After the processing involved with the "image pick-up mode" has ended, processing in step S22 and subsequent steps is repeated.

In contrast, when an instruction to switch to the "image pick-up mode" has not been received (NO in step S30), operation processing unit 100 determines whether an instruction to switch to various setting processing in connection with the "viewing mode" has been received or not (step S34). Namely, whether a coordinate indication on operation image 216 shown in Figs. 10A and 10B has been provided or not is determined. When an instruction to switch to various setting processing in connection with the "viewing mode" has been received (YES in step S34), operation processing unit 100 performs various setting processing in connection with the "viewing mode" (step S36). After the various setting processing in connection with the "viewing mode" has ended, processing in step S22 and subsequent steps is repeated.

In contrast, when an instruction to switch to the various setting processing in connection with the "viewing mode" has not been received (NO in step S34), operation processing unit 100 determines whether an instruction to switch to the "album creation mode" (state ST5 shown in Fig. 9) has been received or not (step S38). Namely, whether a coordinate indication on operation image 210 shown in Figs. 10A and 10B has been provided or not is determined. When an instruction to switch to the "album creation mode" has not been received (NO in step S38), processing in step S22 and subsequent steps is repeated.

When an instruction to switch to the "album creation mode" has been received (YES in step S38), operation processing unit 100 provides display of contents as shown in Fig. 11 on upper LCD 110 and lower LCD 120 (step S40). Namely, operation processing unit 100 inquires of the user about whether to perform a function to automatically initially select an image of interest to be included in the album (automatic image selection). In succession, operation processing unit 100 determines whether an instruction to make automatic image selection has been received or not (step S42). Namely, which of a coordinate indication on operation image 242 shown in Fig. 11 and a coordinate indication on operation image 244 shown in Fig. 11 has been given is determined.

When an instruction to make automatic image selection has been received (YES in step S42), operation processing unit 100 randomly selects one theme of a plurality of themes prepared in advance and extracts as images of interest, one or more images from among images saved in game device 1, in accordance with the selection rules corresponding to the selected theme (step S44). It is noted that operation processing unit 100 holds in main memory 138 (see Fig. 4), information indicating images of interest included in the album. This information retains information for specifying image data showing each image of interest (a folder name, a file name and the like), in association with an order in the album.

In contrast, when an instruction not to make automatic image selection has been received (NO in step S42), operation processing unit 100 skips processing in step S44.

Thereafter, operation processing unit 100 provides display of contents as shown in Fig. 12 or 13 on upper LCD 110 and lower LCD 120 (step S46).

Operation processing unit 100 determines whether an instruction to select an image of interest different from the currently selected image of interest from among the images of interest included in the album being created and displayed on upper LCD 110 has been received or not (step S48). When an instruction to select an image of interest different from the currently selected image of interest has been received (YES in step S48), operation processing unit 100 updates display contents on upper LCD 110 so as to display a newly selected image of interest (step S50). Then, the process proceeds to step S52.

In contrast, when an instruction to select an image of interest different from the currently selected image of interest has not been received (NO in step S48), operation processing unit 100 skips processing in step S50.

In succession, operation processing unit 100 determines whether an instruction to select a thumbnail image different from the currently selected thumbnail image from among images displayed as listing image 202 displayed on lower LCD 120 has been received or not (step S52). When an instruction to select a thumbnail image different from the currently selected thumbnail image has been received (YES in step S52), operation processing unit 100 updates display contents on lower LCD 120 so as to show a newly selected thumbnail image to the user (step S54).

In contrast, when an instruction to select a thumbnail image different from the currently selected thumbnail image has not been received (NO in step S52), operation processing unit 100 skips processing in step S54.

In succession, operation processing unit 100 determines whether an instruction to add a main image corresponding to the selected thumbnail image to the album has been received or not (step S56). When addition to the album has been indicated (YES in step S56), operation processing unit 100 adds as a new image of interest, a main image corresponding to the selected thumbnail image to the album being created (step S58). Then, operation processing unit 100 updates display contents on upper LCD 110 as this image of interest is added.

More specifically, operation processing unit 100 updates information indicating the image of interest included in the album held in main memory 138. Here, ordering of all images of interest included in the album, inclusive of the newly added main image, is updated. Therefore, regarding the order of the images of interest following the newly added main image, those images are moved down.

In contrast, when addition to the album has not been indicated (NO in step S56), operation processing unit 100 skips processing in step 558.

In succession, operation processing unit 100 determines whether an instruction to delete the selected image of interest from the album being created has been received or not (step S60). When deletion from the album has been indicated (YES in step S60), operation processing unit 100 deletes the selected image of interest from the album being created (step S62). Then, operation processing unit 100 updates display contents on upper LCD 110 as this image of interest is deleted.

More specifically, operation processing unit 100 updates information indicating the images of interest included in the album held in main memory 138. Here, ordering of the remaining images of interest except for the newly deleted image of interest is updated. Therefore, regarding the order of the images of interest that followed the deleted main image, those images are moved up.

In contrast, when deletion from the album has not been indicated (NO in step S60), operation processing unit 100 skips processing in step S62.

Steps S42 to S62 described above correspond to the contents in the material selection processing described above.

In succession, operation processing unit 100 determines whether an instruction to start the sound effect association processing has been received or not (step S64). Namely, whether a coordinate indication on operation image 252 shown in Fig. 12 or 13 has been given or not is determined.

When an instruction to start the sound effect association processing has been received (YES in step S64), operation processing unit 100 provides display of contents as shown in Fig. 14 or 15 on upper LCD 110 and lower LCD 120 (step S66).

In succession, operation processing unit 100 determines whether the user's operation on touch panel 122 (see Fig. 1 and the like) has been accepted or not (step S68). When the user's operation on touch panel 122 has been accepted (YES in step S68), operation processing unit 100 performs the association processing determination sub routine (step S70). This association processing determination sub routine is processing for determining whether or not to associate some kind of sound effect with the selected image of interest when the user uses stylus pen 177 or the like to perform the series of position indication operations. Details of this association processing determination sub routine will be described later. Then, the process proceeds to step S74.

In contrast, when the user's operation on touch panel 122 has not been accepted (NO in step S68), operation processing unit 100 skips processing in step S70.

In succession, operation processing unit 100 determines whether an instruction to select an audio icon different from the currently selected audio icon from among audio icons displayed as listing display 286 or 288 displayed on lower LCD 120 has been received or not (step S74). When an instruction to select an audio icon different from the currently selected audio icon has been received (YES in step S74), operation processing unit 100 updates display contents on lower LCD 120 so as to show the newly selected audio icon to the user and reproduces voice and sound corresponding to the newly selected audio icon (step S76).

In contrast, when an instruction to select an audio icon different from the currently selected audio icon has not been received (NO in step S74), operation processing unit 100 skips processing in step S76.

In succession, operation processing unit 100 determines whether an instruction to associate voice and sound corresponding to the selected audio icon with the main image corresponding to the selected image of interest has been received or not (step S78). When an instruction to associate voice and sound with the main image has been received (YES in step S78), operation processing unit 100 associates voice and sound corresponding to the selected audio icon with the main image corresponding to the selected image of interest (step S80). Then, operation processing unit 100 updates display contents on upper LCD 110 as this sound effect association processing is performed.

More specifically, operation processing unit 100 updates information indicating the images of interest included in the album held in main memory 138. Here, information for specifying audio data (a folder name, a file name and the like) and information for specifying image data of the associated image of interest are held in a manner associated with each other.

In contrast, when an instruction to associate voice and sound with the main image has not been received (NO in step S78), operation processing unit 100 skips processing in step S80.

In succession, operation processing unit 100 determines whether an instruction to delete voice and sound associated with the main image corresponding to the selected image of interest has been received or not (step S82). When an instruction to delete the voice and sound associated with the main image has been received (YES in step S82), operation processing unit 100 deletes the voice and sound associated with the main image corresponding to the selected image of interest (step S84). Then, operation processing unit 100 updates display contents on upper LCD 100 as this associated voice and sound is deleted.

More specifically, operation processing unit l00 updates information indicating the image of interest included in the album held in main memory 138. Here, information for specifying the audio data of interest (a folder name, a file name and the like), in such information, is deleted.

In contrast, when an instruction to delete the voice and sound associated with the main image has not been received (NO in step S83), operation processing unit 100 skips processing in step S84.

In succession, operation processing unit 100 determines whether an instruction to end the sound effect association processing has been received or not (step S86). Namely, whether a coordinate indication on operation image 280 shown in Figs. 14 to 19 has been given or not is determined.

When an instruction to end the sound effect association processing has been received (YES in step S86), the process proceeds to step S90. In addition, when an instruction to start the sound effect association processing has been received as well (NO in step S64), the process proceeds to step S90.

In contrast, when an instruction to end the sound effect association processing has not been received (NO in step S86), the processing in step S66 and subsequent steps is repeated.

The steps S66 to S86 described above correspond to the contents in the sound effect association processing described above.

In step S90, operation processing unit 100 determines whether an instruction to start the graffiti processing has been received or not (step S90). Namely, whether a coordinate indication on operation image 254 shown in Fig. 12 or 13 has been given or not is determined.

When an instruction to start the graffiti processing has been received (YES in step S90), operation processing unit 100 performs the graffiti processing in response to the user's operation (step S92). Then, operation processing unit 100 determines whether an instruction to end the graffiti processing has been received or not (step S94). When an instruction to end the graffiti processing has been received (YES in step S94), the process proceeds to step S96. In contrast, when an instruction to end the graffiti processing has not been received (NO in step S94), the processing in step S92 and subsequent steps is repeated.

In contrast, when an instruction to start the graffiti processing has not been received (NO in step S90), the process proceeds to step S98.

The steps S92 to S96 described above correspond to the contents in the graffiti processing described above.

In step S96, operation processing unit 100 determines whether an instruction to complete the album creation processing has been received or not (step S96). Namely, whether a coordinate indication on operation image 256 shown in Fig. 12 or 13 has been given or not is determined. When an instruction to complete the album creation processing has not been received (NO in step S96), the processing in step S22 and subsequent steps is repeated.

When an instruction to complete the album creation processing has been received (YES in step S96), operation processing unit 100 provides display of contents in the album being created on upper LCD 110 (step S98). In addition, operation processing unit 100 determines whether an instruction to complete the album has been received or not (step S100). Namely, whether a coordinate indication on operation image 302 shown in Fig. 20 has been given or not is determined. When an instruction to complete the album has not been received (NO in step S 100), the processing in step S98 and subsequent steps is repeated.

When an instruction to complete the album has been received (YES in step S100), operation processing unit 100 provides screen display of contents that the user is inquired about where to save the generated album data (step S102). Namely, operation processing unit 100 provides display of contents as shown in Fig. 21 on upper LCD 110 and lower LCD 120.

In succession, operation processing unit 100 determines where to save the album data has been indicated or not (step S104). Namely, on which of operation image 306 and operation image 308 shown in Fig. 21 a coordinate indication has been given is determined.

When non-volatile memory 136 (see Fig. 4) is indicated as the saving destination of the album data ("main body" in step S104), operation processing unit 100 sets non-volatile memory 136 as the saving destination of the album data (step S106). Then, the process proceeds to step S 110.

In contrast, when non-volatile memory 136 (see Fig. 4) has been indicated as the saving destination of the album data ("SD card" in step S 104), operation processing unit 100 sets memory card 173 (see Fig. 1) as the saving destination of the album data (step S108). Then, the process proceeds to step S110.

The steps S96 to S108 described above correspond to the contents in the preview processing described above.

In step S110, operation processing unit 100 obtains attribute information on the album of interest and notifies the user of the album data output processing, with the collected attribute information being set as the initial value (step S110). Namely, operation processing unit 100 provides display of contents as shown in Fig. 22 on upper LCD 110 and lower LCD 120. In succession, operation processing unit 100 determines whether an instruction to change the contents in the attribute information on the album data has been received or not (step S112). Namely, on which of operation image 312 and operation image 314 shown in Fig. 22 a coordinate indication has been given is determined.

When change in title in the attribute information on the album data has been indicated ("title" in step S112), operation processing unit 100 accepts input of a new title (step S114). Namely, operation processing unit 100 provides display of contents as shown in Fig. 23 on upper LCD 110 and lower LCD 120, and accepts input of a corresponding character string in response to a position indication operation accepted on touch panel 122. As the input of the character string is completed, the process proceeds to step S 118.

When change in icon in the attribute information on the album data has been indicated ("icon" in step S112), operation processing unit 100 accepts an instruction to change the icon (step S 116). Namely, operation processing unit 100 provides display of contents as shown in Fig. 24 or 25 on upper LCD 110 and lower LCD 120, and accepts input of the selected icon in response to a position indication operation accepted on touch panel 122. As selection of the icon is completed, the process proceeds to step S 118.

In step S118, operation processing unit 100 determines whether an instruction to complete the album data output processing has been received or not (step S 118). Namely, whether a coordinate indication on operation image 316 shown in Fig. 22 has been given or not is determined.

When an instruction to complete the album data output processing has been received (YES in step S118), operation processing unit 100 generates album data based on information held in main memory 138 (see Fig. 4) (information for specifying image data showing an image of interest (a folder name, a file name and the like) or information for specifying audio data associated with each image of interest (a folder name, a file name and the like)) (step S 120). Namely, operation processing unit 100 generates album data having a data structure as shown in Fig. 27. In addition, operation processing unit 100 outputs (causes saving of) the generated album data to the saving destination set in step S 106 or step S 108 (step S 122).

In contrast, when an instruction to complete the album data output processing has not been received (NO in step S118), the processing in step S 112 and subsequent steps is repeated.

The steps S 110 to S120 described above correspond to the contents in the album data output processing described above.

Then, the process ends.

### (j2. Association Processing Determination Sub Routine)

Referring next to Fig. 31, processing contents in the association processing determination sub routine performed in step S70 described above will be described. It is noted that reference is to be made also to operation examples shown in Figs. 16 to 19.

Initially, operation processing unit 100 obtains a two-dimensional coordinate value (an indicated position) detected at the timing of start of detection of the user's operation by touch panel 122, that is, the indication start position (step S701). In succession, operation processing unit 100 determines whether or not an audio icon is present at a position corresponding to the indication start position obtained in step S701 (step S702). When an audio icon is not present at a position corresponding to the indication start position obtained in step S701 (NO in step S702), operation processing unit 100 ends the processing in the association processing determination sub routine and returns to the main routine.

When an audio icon is present at a position corresponding to the indication start position obtained in step S701 (YES in step S702), operation processing unit 100 sets the corresponding audio icon to a selected state (step S703). Then, operation processing unit 100 reproduces voice and sound corresponding to the audio icon set to the selected state (step S704).

In succession, operation processing unit 100 determines whether detection of the user's operation by touch panel 122 is continuing or not (step S705).

When detection of the user's operation by touch panel 122 is continuing (YES in step S705), operation processing unit 100 causes storage of a two-dimensional coordinate value (an indicated position) detected in a current detection cycle (current frame) (step S706). This stored two-dimensional coordinate value (indicated position) is used for determination as to whether or not to perform the sound effect association processing which will be described later. In succession, operation processing unit 100 updates a position of the corresponding audio icon in accordance with variation in the two-dimensional coordinate value detected on touch panel 122 (subsequent variation in the indicated position) (step S707). Namely, in response to the user's operation of stylus pen 177 or the like, operation processing unit 100 provides such an effect that the selected audio icon is drawn out (dragged). Then, operation processing unit 100 waits until the next detection cycle (next frame) (step S708) and repeats processing in step S705 and subsequent steps.

In contrast, when detection of the user's operation by touch panel 122 no longer continues (NO in step S705), that is, when the user's series of position indication operations has ended, operation processing unit 100 determines whether to perform association processing or not based on variation in the two-dimensional coordinate value (indicated position) within a prescribed number of detection cycles in the past (step S709). More specifically, operation processing unit 100 calculates difference between a coordinate value located lowest in lower LCD 120 (a minimum value in the vertical direction of the sheet surface) and a coordinate value located highest therein (a maximum value in the vertical direction of the sheet surface) among the two-dimensional coordinate values corresponding to the prescribed number of successive detection cycles respectively, and then determines whether the calculated difference in coordinate value exceeds a predetermined threshold value or not.

When it is determined to perform association processing (YES in step S709), operation processing unit 100 associates the voice and sound corresponding to the audio icon selected in step S703 with the main image corresponding to the selected image of interest (step S710). Then, operation processing unit 100 ends the processing in the association processing determination sub routine and returns to the main routine.

When it is determined not to perform association processing (NO in step S709), the processing in the association processing determination sub routine ends and the process returns to the main routine.

### <K. Variation>

### (k1. First Variation)

In the embodiment described above, game device 1 adopting such a foldable structure that upper LCD 110 and lower LCD 120 face each other with a pivot shaft being interposed has been exemplified, however, the game device is not limited to such a form. For example, a form may be such that a housing accommodating upper LCD 110 and a housing accommodating lower LCD 120 are slidably engaged with each other. Alternatively, such a form that a plurality of LCDs are arranged in the same housing may be adopted.

Relative positional relation among the plurality of LCDs is not limited to relation in a vertical direction and such a construction that a plurality of LCDs are aligned in a lateral direction can also be adopted.

In addition, a plurality of display regions may be provided in the same display. For example, a relatively large display may be adopted and a plurality of display regions partitioned in a mutually recognizable manner may be provided in a display surface. Here, a plurality of first display regions and/or second display regions may be provided. For example, a second display region can be arranged in a central portion of the display surface of the display and a plurality of first display regions can be arranged in a plurality of directions (for example, above and below) among above, below, on the left, and on the right. When such a construction is adopted, in response to a direction of the user's operation in the second display region, which of an object displayed in the first display region located above and the first display region located below is to be associated may be determined.

### (k2. Second Variation)

In the embodiment described above, an example where a certain embodiment of the present invention is implemented as game device 1 representing one example of an information processing apparatus is shown, however, a manner other than this can also be adopted.

For example, the present invention can also be implemented as a non-transitory computer readable storage medium contained in some kind of information processing apparatus (game device 1 as described above) or as an information processing program (instruction set) stored in a non-transitory computer readable storage medium that can removably be attached to an information processing apparatus.

In the former case, the information processing program is read by a processing apparatus having display means having first and second display regions and the processing is performed in the computer.

In the latter case, an information processing system including a processing apparatus main body having such a computer as a game device or a portable terminal and a storage medium providing an information processing program to the processing apparatus main body is configured.

In any case, the information processing program stored in a computer readable storage medium does not have to include all programs necessary for processing provided by game device 1 described above. Namely, an instruction set or a library essentially possessed by the processing apparatus main body such as game device 1 may be made use of so as to realize processing provided by game device 1 according to the present embodiment described above.

In addition, in the embodiment described above, a case where a series of processing is performed in single game device 1 has been described, however, the series of processing may be performed by a plurality of information processing apparatuses in a distributed manner. For example, in an information processing system including a terminal device and a server device capable of communicating with the terminal device through a network, partial processing in the series of processing above may be performed by the server device. Further, in the information processing system including the terminal device and the server device capable of communicating with the terminal device through the network, main processing in the series of processing above may be performed by the server device and partial processing may be performed by the terminal device.

It is noted that the present invention relates to a user interface for associating the plurality of pieces of data with one another, and naturally a type of data to be associated does not matter.

Although the present invention has been described and illustrated in detail, it is clearly understood that the same is by way of illustration and example only and is not to be taken by way of limitation, the scope of the present invention being interpreted by the terms of the appended claims.

## Claims

1. An information processing apparatus (1), comprising:
display means (110, 120) having first and second display regions;
first display control means (100, 111) for displaying a first object showing first data in the first display region;
second display control means (100, 12) for displaying a second object showing second data in the second display region;
acceptance means (122) for accepting a series of position indication operations in the second display region; and
association control means (100) for selecting the second object based on a position indicated by the series of position indication operations in the second display region accepted by the acceptance means and performing processing for associating the first data and the second data corresponding to the selected second object with each other based on subsequent variation in the indicated position.

2. The information processing apparatus according to claim 1, wherein
the association control means is configured to associate the second data with the first data when the subsequent variation in the indicated position satisfies a prescribed condition.

3. The information processing apparatus according to claim 1 or 2, wherein the association control means is configured to select the second object based on an indication start position.

4. The information processing apparatus according to any one of claims 1 to 3, wherein
the first display control means is configured to display the first object selected before the series of position indication operations in the first display region, based on an input operation different from the series of position indication operations.

5. The information processing apparatus according to any one of claims 1 to 4, wherein
the first display control means is configured to display a notification image indicating that the first data and the second data are associated with each other, over or proximate to the first object.

6. The information processing apparatus according to claim 5. wherein
the first display control means is configured to use as the notification image, an icon showing the second data associated with the first data corresponding to the first object of interest.

7. The information processing apparatus according to any one of claims 1 to 6, wherein
even when other second data has already been associated with the first data, the association control means is configured to cancel association with the other second data in response to the series of position indication operations and to associate second data corresponding to a newly selected second object with the first data.

8. The information processing apparatus according to claim 2, wherein
the prescribed condition includes a condition that variation in indicated position relative to the second display region, in a direction in which the first display region is present, occurs in the series of position indication operations.

9. The information processing apparatus according to claim 2, wherein
the prescribed condition includes a condition that variation in indicated position relative to the second display region, in a direction in which the first display region is present, occurs within a prescribed period of time immediately before end of the series of position indication operations, in the series of position indication operations.

10. The information processing apparatus according to claim 2, wherein
the prescribed condition includes a condition relating to at least one of a moving speed and an amount of displacement in connection with the series of position indication operations.

11. The information processing apparatus according to claim 1, further comprising reproduction means (100) for reproducing, when the second object is selected in the series of position indication operations, the second data corresponding to the second object.

12. The information processing apparatus according to any one of claims 1 to 11, wherein
the second display control means is configured to display a plurality of second objects in the second display region in a selectable manner.

13. The information processing apparatus according to any one of claims 1 to 12, wherein
the display means includes first and second display screens aligned in a vertical direction when a user holds the information processing apparatus, the first display region corresponding to the first display screen, and the second display region corresponding to the second display screen, and
the acceptance means includes a touch panel arranged in correspondence with the second display screen.

14. An information processing system, comprising:
a storage medium storing an information processing program; and
a processing apparatus main body to which the storage medium can be attached,
the processing apparatus main body including display means having first and second display regions, and
as a computer of the processing apparatus main body executes the information processing program stored in the storage medium, the processing apparatus main body being caused to function as:
first display control means (S46, S50, S58. S62, S66) for displaying a first object showing first data in the first display region;
second display control means (S46. S54. S66) for displaying a second object showing second data in the second display region;
acceptance means (S68) for accepting a series of position indication operations in the second display region; and
association control means (S70) for selecting the second object based on a position indicated by the series of position indication operations in the second display region accepted by the acceptance means and performing processing for associating the first data and the second data corresponding to the selected second object with each other, based on subsequent variation in the indicated position.

15. An information processing program executed by a computer of a processing apparatus including a display portion having first and second display regions, the information processing program comprising:
first display control instructions (S46. S50, S58, S62, S66) for displaying a first object showing first data in the first display region;
second display control instructions (S46, S54, S66) for displaying a second object showing second data in the second display region;
acceptance instructions (S68) for accepting a series of position indication operations in the second display region; and
association control instructions (S70) for selecting the second object based on a position indicated by the series of position indication operations in the second display region accepted in response to the acceptance instructions and performing processing for associating the first data and the second data corresponding to the selected second object with each other, based on subsequent variation in the indicated position.
